(19)

Europäisches Patentamt
European Patent Office
Office européen des brevets

(11) **EP 3 883 015 A1**

(12) **EUROPEAN PATENT APPLICATION**

(43) Date of publication:
**22.09.2021 Bulletin 2021/38**

(21) Application number: **20193589.7**

(22) Date of filing: **31.08.2020**

(51) Int Cl.:
*H01M 4/131* (2010.01)
*H01M 4/485* (2010.01)
*H01M 4/1391* (2010.01)
*H01M 4/36* (2006.01)
*H01M 4/62* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.03.2020 JP 2020048659**

(71) Applicant: **KABUSHIKI KAISHA TOSHIBA**
**Minato-ku**
**Tokyo**
**105-0023 (JP)**

(72) Inventors:
• **Yoshima, Kazuomi**
  **Tokyo, 105-0023 (JP)**
• **Harada, Yasuhiro**
  **Tokyo, 105-0023 (JP)**
• **Takami, Norio**
  **Tokyo, 105-0023 (JP)**

(74) Representative: **Hoffmann Eitle**
**Patent- und Rechtsanwälte PartmbB**
**Arabellastraße 30**
**81925 München (DE)**

(54) **ELECTRODE, SECONDARY BATTERY, BATTERY PACK, AND VEHICLE**

(57)     According to one embodiment, an electrode (3) is provided. The electrode (3) includes an active material-containing layer (3b) including active material particles containing a niobium-titanium composite oxide and a nitrogen atom-containing binder. The spectral data obtained by performing X-ray photoelectron spectroscopy measurement on a surface of the active material-containing layer (3b) includes a first peak existing at 210 ± 5 eV position, a second peak existing at 458 ± 5 eV position, and a third peak existing at 400 ± 5 eV position. In the X-ray photoelectron spectroscopy measurement, an element ratio r1 of a nitrogen atom to a niobium atom and a titanium atom is within the range of 0.2 to 2.

F I G. 10

**Description**

FIELD

The present disclosure relates generally to an electrode, a secondary battery, a battery pack, and a vehicle.

BACKGROUND

Recently, secondary batteries, such as a nonaqueous electrolyte secondary battery like a lithium ion secondary battery, have been actively researched and developed as a high energy-density battery. The secondary batteries, such as a nonaqueous electrolyte secondary battery, are anticipated as a power source for vehicles such as hybrid electric automobiles, electric cars, an uninterruptible power supply for base stations for portable telephones, or the like. Therefore, the secondary battery is demanded to, in addition to having a high energy density, be excellent in other performances such as rapid charge-discharge performances and long-term reliability, as well. For example, not only is the charging time remarkably shortened in a secondary battery capable of rapid charge and discharge, but the battery is also capable of improving motive performances in vehicles such as hybrid electric automobiles, and efficient recovery of regenerative energy of motive force.

In order to enable rapid charge/discharge, electrons and lithium ions must be able to migrate rapidly between the positive electrode and the negative electrode. However, when a battery using a carbon-based negative electrode is repeatedly subjected to rapid charge and discharge, precipitation of dendrite of metallic lithium on the electrode may sometimes occur, raising concern of heat generation or ignition due to internal short circuits.

In light of this, a battery using a metal composite oxide in a negative electrode in place of a carbonaceous material has been developed. In particular, in a battery using an oxide of titanium in the negative electrode, rapid charge and discharge can be stably performed. Such a battery also has a longer life than in the case of using a carbon-based negative electrode.

However, compared to carbonaceous materials, oxides of titanium have a higher potential relative to metallic lithium. That is, oxides of titanium are more noble. Furthermore, oxides of titanium have a lower capacity per weight. Therefore, a battery using an oxide of titanium for the negative electrode has a problem that the energy density is low.

For example, the electrode potential an oxide of titanium is about 1.5 V (vs. Li/Li$^+$) relative to metallic lithium, which is higher (i.e., more noble) in comparison to potentials of carbon based negative electrodes. The potential of an oxide of titanium is attributed to the redox reaction between Ti$^{3+}$ and Ti$^{4+}$ upon electrochemical insertion and extraction of lithium, and is therefore electrochemically restricted. It is also a fact that rapid charge/discharge of lithium ions can be performed stably at a high electrode potential of about 1.5 V (vs. Li/Li$^+$).

On the other hand, considering the capacity per unit weight, the theoretical capacity of titanium dioxide (anatase structure) is about 165 mAh/g, and the theoretical capacity of spinel type lithium-titanium composite oxides such as Li$_4$Ti$_5$O$_{12}$ is about 180 mAh/g. On the other hand, the theoretical capacity of a general graphite based electrode material is 385 mAh/g and greater. As such, the capacity density of an oxide of titanium is significantly lower than that of the carbon based negative electrode material. This is due to there being only a small number of lithium-insertion sites in the crystal structure, and lithium tending to be stabilized in the structure, and thus, substantial capacity being reduced.

In consideration of the above, a new electrode material containing Ti and Nb has been examined. Such a material containing a niobium-titanium composite oxide is expected to have a high charge and discharge capacity. Particularly, a composite oxide represented by TiNb$_2$O$_7$ has a high theoretical capacity exceeding 380 mAh/g. Therefore, a niobium-titanium composite oxide has been expected as a high-capacity material substituted for Li$_4$Ti$_5$O$_{12}$; however, due to the occurrence of expansion and contraction of volume during charging and discharging, improvement of cycle life characteristics has become an issue.

BRIEF DESCRIPTION OF THE DRAWINGS

FIG. 1 is a cross-sectional view schematically illustrating an example of a secondary battery according to the approach;
FIG. 2 is an enlarged cross-sectional view of section A of the secondary battery as illustrated in FIG. 1;
FIG. 3 is a partially cut-out perspective view schematically illustrating another example of the secondary battery according to the approach;
FIG. 4 is an enlarged cross-sectional view of section B of the secondary battery as illustrated in FIG. 3;
FIG. 5 is a perspective view schematically illustrating an example of a battery module according to the approach;
FIG. 6 is an exploded perspective view schematically illustrating an example of a battery pack according to the approach;

FIG. 7 is a block diagram illustrating an example of an electric circuit of the battery pack as illustrated in FIG. 6;

FIG. 8 is a partial perspective view schematically illustrating an example of a vehicle according to the approach;

FIG. 9 is a diagram schematically illustrating an example of a control system related to an electric system in the vehicle according to the approach; and

FIG. 10 is spectral data illustrating results of X-ray photoelectron spectroscopy measurement on a surface of an active material-containing layer according to examples and comparative examples.

DETAILED DESCRIPTION

According to an approach, an electrode is provided. The electrode includes an active material-containing layer including active material particles containing a niobium-titanium composite oxide and a nitrogen atom-containing binder. The spectral data obtained by performing X-ray photoelectron spectroscopy measurement on a surface of the active material-containing layer includes a first peak existing at $210 \pm 5$ eV position, a second peak existing at $458 \pm 5$ eV position, and a third peak existing at $400 \pm 5$ eV position. In the X-ray photoelectron spectroscopy measurement, an element ratio r1 of a nitrogen atom to a niobium atom and a titanium atom is within the range of 0.2 to 2. The element ratio r1 is a ratio of a peak area of the third peak ($S_3$) to a peak area of the first peak ($S_1$) and a peak area of the second peak ($S_2$) ($S_3/ (S_1 + S_2)$).

According to another approach, a secondary battery including a negative electrode according to the an approach, a positive electrode, and an electrolyte is provided.

According to another approach, a battery pack is provided. The battery pack includes the secondary battery according to the approach.

According to another approach, a vehicle is provided. The vehicle includes the battery pack according to the approach.

According to at least one of the approaches described above, it is possible to provide an electrode that can achieve the excellent cycle life characteristics.

Hereinafter, approaches will be described with reference to the drawings. The same reference signs are applied to common components throughout the approaches and overlapped explanations are thereby omitted. Each drawing is a schematic view for encouraging explanations of the approach and understanding thereof, and thus there are some details in which a shape, a size and a ratio are different from those in a device actually used, but they can be appropriately design-changed considering the following explanations and known technology.

(First approach)

According to a first approach, an electrode is provided. The electrode includes an active material-containing layer including active material particles containing a niobium-titanium composite oxide and a nitrogen atom-containing binder. The spectral data obtained by performing X-ray photoelectron spectroscopy measurement on a surface of the active material-containing layer includes a first peak existing at $210 \pm 5$ eV position, a second peak existing at $458 \pm 5$ eV position, and a third peak existing at $400 \pm 5$ eV position. In the X-ray photoelectron spectroscopy measurement, an element ratio r1 of a nitrogen atom to a niobium atom and a titanium atom is within the range of 0.2 to 2. The element ratio r1 is a ratio of a peak area of the third peak ($S_3$) to a peak area of the first peak ($S_1$) and a peak area of the second peak ($S_2$) : ($S_3 / (S_1 + S_2)$) .

The niobium-titanium composite oxide expands and contracts in volume with charge and discharge. Therefore, when the electrode containing the niobium-titanium composite oxide is repeatedly charged and discharged, the active material-containing layer expands, the active material particles are separated from each other, or the active material-containing layer is separated from a current collector. The expansion of the active material-containing layer is not due only to the expansion of the active material particles, and one factor is, for example, that the binder absorbs the electrolyte to swell. Swelling of the binder binding the active material particles greatly affects the expansion of the active material-containing layer.

When the active material-containing layer expands, for example, an electron conductive paths between the active material particles, between the active material particle and the current collector, and between an optionally mixed conductive agent and the active material particle are reduced. Therefore, the resistance increases. The resistance increased by this is mainly AC resistance. Furthermore, since a coating of a side reaction is formed on the surface of the active material particle due to the side reaction between the active material particles and the electrolyte, the resistance is more likely to increase. When the active material-containing layer expands, not only the cycle life characteristics deteriorate, but also the output characteristics deteriorate.

The electrode according to the approach includes a nitrogen atom-containing binder as a binder and the surface of the active material particles is positively covered with the binder, so that excellent cycle life characteristics can be achieved. Specifically, in a case where a surface analysis by X-ray photoelectron spectroscopy (XPS) measurement is performed on the active material-containing layer, when the element ratio r1 of the nitrogen atom to the niobium atom and the titanium atom is within the range of 0.2 to 2, the excellent cycle life characteristics can be achieved.

Since the valence of the niobium atom contained in the niobium-titanium composite oxide to be coated is pentavalent, the niobium-titanium composite oxide has strong Lewis acidity derived therefrom. In addition, since the synthesized niobium-titanium composite oxide may have some oxygen deficiency, it is considered that more active niobium atoms are also mixed in that case. On the other hand, since the nitrogen contained in the nitrogen atom-containing binder is a Lewis base, it is easily adsorbed on the particle surface containing the niobium-titanium composite oxide containing niobium which is Lewis acid. That is, the surface of the active material particle and/or the surface of the active material-containing layer may have a nitrogen atom-containing coating. Since the nitrogen atom-containing binder easily covers the surface of the active material particle containing the niobium-titanium composite oxide, it is possible to suppress a side reaction between the surface of the active material particle and the electrolyte.

Further, the nitrogen atom-containing binder does not easily swell with respect to the electrolyte. In other words, the nitrogen atom-containing binder does not easily absorb the electrolyte. Therefore, the active material-containing layer according to the approach is less likely to expand even if the charge-and-discharge cycle is repeated, and thus the binding property can be maintained among the materials included in the active material-containing layer.

Since the niobium-titanium composite oxide expands and contracts in volume with charge and discharge as described above, the volume of voids in the active material-containing layer increases when the charge-and-discharge cycle is repeated. If a binder such as styrene-butadiene rubber that easily swells with respect to the electrolyte is used, the voids are filled with the binder, which may deteriorate the cycle characteristics.

As a result of the surface analysis by XPS, the fact that the element ratio r1 is within the range of 0.2 to 2 means that the surfaces of the active material particles containing the niobium-titanium composite oxide is appropriately covered with the nitrogen atom-containing binder. If the element ratio r1 is less than 0.2, the coating amount with the nitrogen atom-containing binder is insufficient, and the side reaction cannot be significantly suppressed. When the element ratio r1 exceeds 2, the active material particles are excessively covered with the nitrogen atom-containing binder, so that the internal resistance of the electrode increases. Further, even with a nitrogen atom-containing binder having high swelling resistance, the effect of swelling cannot be ignored, and the active material-containing layer expands to deteriorate the cycle life characteristics.

The element ratio r1 is preferably within the range of 0.25 to 1.5, and more preferably within the range of 0.25 to 1.0. When the element ratio r1 is in this range, an adequate coating is formed, and good binding property of the materials contained in the active material-containing layer is obtained, so that the excellent cycle life characteristics can be achieved.

The element ratio r1 can be determined by performing the surface analysis by XPS on the active material-containing layer in the procedure described below.

<X-ray photoelectron spectroscopy (XPS) measurement>

XPS measurement is performed on an electrode (for example, a negative electrode) that has been brought into a discharged state by the following procedure. Here, in a case of a battery, the discharged state means a state after discharging according to the recommended charging/discharging specifications of the battery. However, the discharged state of the battery here includes a state where the SOC of the battery is within the range of 0% to 30%. In a case of discharging the battery, an unused battery is used.

In a case where the electrode is taken out to be discharged, the discharged state means a state after charging as follows. First, the electrode taken out from the battery is washed with, for example, a chain carbonate solvent such as ethylmethyl carbonate to remove Li salt and the like, and then dried. Next, a three-electrode electrochemical cell using the dried electrode as a working electrode and lithium metal as a counter electrode and a reference electrode is prepared. Here, the electrolyte of the three-electrode electrochemical cell is not particularly limited, for example, a solution in which 1 mol/L of lithium hexafluorophosphate ($LiPF_6$) is dissolved in a mixed solvent of ethylene carbonate and methyl ethyl carbonate in a volume ratio of 1 : 1.

The cell thus prepared is charged until the potential of the working electrode reaches 1.0 V (vs $Li/Li^+$). Then, this cell is discharged until the potential of the working electrode reaches 3.0 V (vs $Li/Li^+$), and the electric capacity C [mAh] at this time is measured. The current value of the current that flows when adjusting the SOC is within the range of 0.1 C to 1 C.

The XPS measurement can be performed, for example, as described below with respect to the electrode in the discharged state by the procedure described above. As an apparatus used for this measurement, Quantera SXM manufactured by ULVAC-PHI, Inc. or an apparatus having a function equivalent to this can be used. A single crystal spectroscopic Al-K$\alpha$ ray (1486.6 eV) is used as an excitation X-ray source. An X-ray output is 4 kW (13 kV x 310 mA), a photoelectron detection angle is 45°, and an analysis area is approximately 4 mm x 0.2 mm.

The electrode in the discharged state is taken out in an argon atmosphere and washed with, for example, methyl ethyl carbonate to remove a Li salt adhering to the electrode surface. After removing the Li salt, the electrode is dried and then mounted on a sample holder. The sample is carried in under an inert atmosphere, for example, a nitrogen atmosphere. Scanning is performed at 0.10 eV/step.

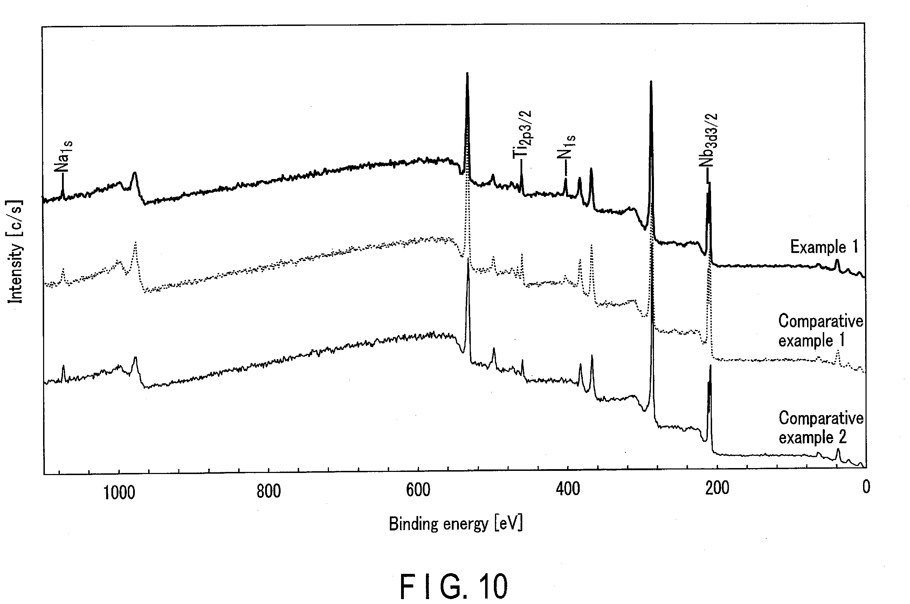

The spectral data obtained by the XPS measurement is subjected to smoothing and horizontal axis correction data processing. As the smoothing, 9-point smoothing was performed, and as horizontal axis correction, $Nb_{5/2}$ peak was regarded as appearing at 207.1 eV ($Nb^{3+}$) and was corrected. As an example, FIG. 10 illustrates the spectral data according to the examples and the comparative examples, which will be described later.

The spectral data obtained by X-ray photoelectron spectroscopy measurement on a surface of the active material-containing layer according to the approach has at least a first peak appearing at $210 \pm 5$ eV position, a second peak appearing at $458 \pm 5$ eV position, and a third peak appearing at $400 \pm 5$ eV position. The first peak corresponds to a $Nb3d_{3/2}$ peak and is a peak derived from a niobium atom. The second peak corresponds to a $Ti2p_{3/2}$ peak and is a peak derived from a titanium atom. The third peak corresponds to a N1s peak and is a peak derived from a nitrogen atom. The peak area of each of the $Nb3d_{3/2}$ peak, $Ti2p_{3/2}$ peak and N1s peak can be calculated, and the element ratio of the elements can be calculated from ratio of the calculated peak areas.

The element ratio r1 is a ratio of a peak area of the third peak to a peak area of the first peak and a peak area of the second peak (peak area of third peak/(peak area of first peak + peak area of second peak))

That is, it can be said that the element ratio r1 is the element ratio of the nitrogen atom to the niobium atom and the titanium atom. The peak area of the first peak may be represented by $S_1$, the peak area of the second peak may be represented by $S_2$, and the peak area of the third peak may be represented by $S_3$. Therefore, the element ratio r1 can be represented by the following Formula (A).

$$r1 = S_3/(S_1 + S_2) \ ... \ (A)$$

The spectral data obtained by XPS measurement on the surface of the active material-containing layer may further have a fourth peak appearing at $1072 \pm 5$ eV position. The fourth peak corresponds to, for example, a Na1s peak and is a peak derived from a sodium atom. This sodium is, for example, derived from carboxymethyl cellulose (CMC). The active material-containing layer included in the electrode according to the approach preferably further contains carboxymethyl cellulose. The CMC functions, for example, as a thickener for a slurry at the time of producing an electrode or as a binder for an electrode materials.

In a case where the spectral data further has the fourth peak, an element ratio r2 of the sodium atoms to the niobium atoms and the titanium atoms is preferably within the range of 0.01 to 0.3. The element ratio r2 is a ratio of a peak area of the fourth peak to a peak area of the first peak and a peak area of the second peak (peak area of fourth peak/(peak area of first peak + peak area of second peak)). That is, the element ratio r2 can also be determined by performing surface analysis by XPS on the active material-containing layer described above. The fourth peak may be represented by $S_4$. Therefore, the element ratio r2 can be represented by the following Formula (B).

$$r2 = S_4/(S_1 + S_2) \ ... \ (B)$$

If the element ratio r2 is less than 0.01, the cycle life characteristics tend to be inferior because the dispersion of the electrode materials is insufficient. If the element ratio r2 exceeds 0.3, for example, since excessive CMC is present on the surface of the active material-containing layer, there is a possibility that the CMC expands due to absorbance of the electrolyte, impairing the electrolyte flow around the electrode materials, and preventing the electrolyte from reaching every corner of the active material-containing layer. As a result, cycle life characteristics tend to be inferior. The element ratio r2 is more preferably within the range of 0.05 to 0.25. When the element ratio r2 is within this range, the electrode material is sufficiently dispersed, so that the capacity retention ratio tends to be excellent.

Hereinafter, the electrode according to the approach will be described in detail.

The electrode according to the approach can include a current collector and an active material-containing layer. The active material-containing layer can be formed on one surface or both surfaces of the current collector. The active material-containing layer contains active material particles containing a niobium-titanium composite oxide and a nitrogen atom-containing binder. The active material-containing layer may further contain a conductive agent. The electrode according to the approach may be a negative electrode or a positive electrode. The electrode according to the approach is, for example, an electrode for a battery or an electrode for a secondary battery.

The niobium-titanium composite oxide has, for example, a monoclinic crystal structure. The monoclinic niobium-titanium composite oxide is, for example, at least one selected from the group consisting of a composite oxide represented by General Formula $Li_xTi_{1-y}M1_yNb_{2-z}M2_zO_{7+\delta}$, and a composite oxide represented by General Formula

$Li_xTi_{1-y}M3_{y+z}Nb_{2-z}O_{7-\delta}$. Here, M1 is at least one selected from the group consisting of Zr, Si, and Sn. M2 is at least one selected from the group consisting of V, Ta, and Bi. M3 is at least one selected from the group consisting of Mg, Fe, Ni, Co, W, Ta, and Mo. Each subscript in the composition formula satisfies $0 \leq x \leq 5$, $0 \leq y < 1$, $0 \leq z < 2$, and $-0.3 \leq \delta \leq 0.3$.

Specific examples of the monoclinic niobium-titanium composite oxides include $Nb_2TiO_7$, $Nb_2Ti_2O_9$, $Nb_{10}Ti_2O_{29}$, $Nb_{14}TiO_{37}$, and $Nb_{24}TiO_{62}$. The monoclinic niobium-titanium composite oxide may be a substituted niobium-titanium composite oxide in which at least a part of Nb and/or Ti is substituted with a dopant. Examples of substitution elements are Na, K, Ca, Co, Ni, Si, P, V, Cr, Mo, Ta, Zr, Mn, Fe, Mg, B, Pb, and Al. The substituted niobium-titanium composite oxide may include one kind or two or more kinds of the substitution elements.

The active material particles may contain an active material other than the niobium-titanium composite oxide. Examples of other active materials include lithium titanate having a ramsdellite structure (for example, $Li_{2+y}Ti_3O_7$, $0 \leq y \leq 3$), lithium titanate having a spinel structure (for example, $Li_{4+x}Ti_5O_{12}$, $0 \leq x \leq 3$), monoclinic titanium dioxide ($TiO_2(B)$), anatase titanium dioxide, rutile titanium dioxide, hollandite titanium composite oxide, and orthorhombic titanium-containing composite oxide.

Examples of the orthorhombic titanium-containing composite oxide include a compound represented by $Li_{2+a}M(I)_{2-b}Ti_{6-c}M(II)_dO_{14+\sigma}$. Here, M(I) is at least one selected from the group consisting of Sr, Ba, Ca, Mg, Na, Cs, Rb, and K. M(II) is at least one selected from the group consisting of Zr, Sn, V, Nb, Ta, Mo, W, Y, Fe, Co, Cr, Mn, Ni and Al. The respective subscripts in the composition formula are specified as follows: $0 \leq a \leq 6$, $0 \leq b < 2$, $0 \leq c < 6$, $0 \leq d < 6$, and $-0.5 \leq \sigma \leq 0.5$. Specific examples of the orthorhombic titanium-containing composite oxide include $Li_{2+a}Na_2Ti_6O_{14}$ ($0 \leq a \leq 6$).

The ratio of the niobium-titanium composite oxide in the active material particle is, for example, 50% by mass or more, and preferably 80% by mass or more.

<Powder X-ray diffraction>

The crystal structure of the active material particles can be confirmed by powder X-ray diffraction (XRD). As an apparatus for powder X-ray diffraction measurement, for example, SmartLab manufactured by Rigaku Corporation or an apparatus having an equivalent function is used. The measurement conditions are as follows:

X-ray source: Cu target
Output: 45 kV 200 mA
Solar slit: 5° for both incident and reception
Step width ($2\theta$): 0.02 deg
Scan speed: 20 deg/min
Semiconductor detector: D/teX Ultra 250
Sample plate holder: Flat glass sample plate holder (thickness 0.5 mm)
Measurement range: $5° \leq 2\theta \leq 90°$

An average particle diameter (D50) of the active material particles containing the niobium-titanium composite oxide is, for example, within the range of 0.5 μm to 5 μm. If the average particle diameter (D50) is less than 0.5 μm, the specific surface area is high and there are many voids in the electrode, which makes it difficult to increase the electrode density. As a result, the contact among the active material particles in the electrode and the contact between the active material particle and the conductive agent are deteriorated, and the life performance tends to be reduced. Further, since a specific surface area is high, the reactivity with the electrolyte is high, and the resistance is increased due to the formation of the side reaction product coating on the electrode surface, so that the rapid charge and discharge performance tends to be deteriorated. On the other hand, if the average particle diameter (D50) is larger than 5 μm, the diffusion distance of Li ions in the particles becomes long, and the rapid charge and discharge performance tends to be deteriorated. The average particle diameter D50 can be determined by measuring the particle size distribution by a laser diffraction scattering method.

The BET specific surface area of the niobium-titanium composite oxide included in the active material is preferably 0.1 m$^2$/g or more and less than 100 m$^2$/g, though no particular limitation is imposed. When the specific surface area is 0.1 m$^2$/g or more, a contact area with an electrolytic solution can be secured, good discharge rate characteristics can be easily obtained, and the charging time can be shortened. When the BET specific surface area is less than 100 m$^2$/g, reactivity with the electrolytic solution does not become too high, and therefore, the life characteristics can be improved. Further, when the BET specific surface area is less than 100 m$^2$/g, applicability becomes good for a slurry including the active material, which is used in the later-described production of an electrode.

The nitrogen atom-containing binder is, for example, a polymer or copolymer containing at least one monomer containing a nitrogen atom. All the monomers contained in the polymer or copolymer may contain a nitrogen atom. The monomer containing a nitrogen atom is, for example, at least one selected from the group consisting of acrylic acid, acrylonitrile, an isocyanate compound, and an imide compound. Although acrylic acid does not contain a nitrogen atom, a polymer or copolymer containing acrylic acid may contain a nitrogen atom in at least a part of the side chain in the form of an amino group, an aminoalkyl group, and an imide group. Acrylic acid containing at least one selected from the group consisting of an amino group, an aminoalkyl group, and an imide group in the side chain is regarded as a monomer containing a nitrogen atom.

In a case where the nitrogen atom-containing binder is a copolymer, this copolymer may contain, in addition to the monomer containing a nitrogen atom, for example, (meth)acrylate, (meth)acrylamide, a vinyl cyanide monomer, a carboxyl monomer, and the like. In this case, the flexibility of the active material-containing layer is improved. The nitrogen atom-containing binder preferably contains a monomer containing a nitrogen atom in a proportion of 50% by mol to 95% by mol. If the proportion of the monomer containing a nitrogen atom in the polymerization component is too low, the coverage on the surface of the active material particle may decrease, which is not preferable.

A hydrophilic-lipophilic balance (HLB) value of the nitrogen atom-containing binder is preferably within the range of 8 to 14. The HLB value is an index representing the ratio of hydrophilicity and hydrophobicity of a surfactant. The HLB value takes a value between 0 and 20, and the closer it is to 0, the more hydrophobic it is, and the closer it is to 20, the more hydrophilic it is.

When the HLB value of the nitrogen atom-containing binder is within the range of 8 to 14, the binder can self-emulsify or self-diffuse in water. Therefore, the nitrogen atom-containing binder contained in the slurry for forming an active material-containing layer can self-diffuse in water at the time of producing an electrode to be described later. As a result, the surface of the active material particle can be positively covered with the nitrogen atom-containing binder.

If the HLB value of the nitrogen atom-containing binder is too low, the nitrogen atom-containing binder is difficult to emulsify in water. Therefore, in the obtained active material-containing layer, the nitrogen atom-containing binder may not be able to sufficiently cover the surface of the active material particle. As a result, the element ratio r1 determined by XPS with respect to the surface of the active material-containing layer may be less than 0.2. If the HLB value is too high, for example, the carbon in the slurry tends to agglomerate and the battery performance may deteriorate.

In a case where the coverage of the active material particles is insufficient due to the low HLB value of the nitrogen atom-containing binder, a dispersant may be further added to the slurry for forming an active material-containing layer. As the dispersant, a material having a hydrophilic group such as polyvinylpyrrolidone (PVP) can be used. When mixing the dispersant with the nitrogen atom-containing binder having a low HLB value, the dispersibility of the binder in the pure water slurry can be enhanced. With this, the coverage of the nitrogen atom-containing binder on the active material particles can be enhanced. The active material-containing layer can further contain a dispersant at a ratio of, for example, 0.05% by mass to 30% by mass with respect to the mass of the nitrogen atom-containing binder. Examples of the dispersant include polyvinylpyrrolidone, polyvinyl alcohol, a carboxyvinyl polymer, hydroxyethyl cellulose, and a naphthalenesulfonic acid condensate.

The HLB value of the nitrogen atom-containing binder can be obtained by the Davis method. First, as described below, it is necessary to identify the binder type contained in the electrode to specify the hydrophilic group and the hydrophobic group.

The binder is dissolved and extracted from the electrode with a solvent that dissolves only the binder, and filtered to remove, for example, the active material and the conductive agent. Examples of the solvent that dissolves only the binder include N-methyl-2-pyrrolidone (NMP). After that, the binder species can be identified by analyzing the filtrate by gas chromatography-mass spectrometry (GC-MS), liquid chromatography-mass spectrometry (LC-MS), and Fourier transform-infrared spectroscopy (FT-IR). Alternatively, the binder species may be identified by analyzing the electrode surface by infrared spectroscopy (Attenuated Total Reflectance: ATR).

The predetermined number of groups is determined according to the hydrophilic group and the hydrophobic group contained in the compound. For example, the hydroxyl group is a hydrophilic group, and the number of groups is 1.9. Further, for example, a methyl group and a methylene group are hydrophobic groups, and the number of groups is - 0.475. The HLB value of the target binder is calculated by the following Formula (1).

$$\text{Formula (1): [HLB value]} = 7 + SUM_1 - SUM_2$$

In Formula (1), $SUM_1$ represents the total number of hydrophilic groups, and $SUM_2$ represents the total number of hydrophobic groups.

The nitrogen atom-containing binder is, for example, at least one selected from the group consisting of an acrylic acid binder, an acrylonitrile-based binder, an acrylic acid/acrylonitrile copolymer binder, and a urethane-based binder. The acrylic acid binder contains a nitrogen atom-containing monomer having in the side chain at least one selected from the group consisting of an amino group, an aminoalkyl group, and an imide group. The nitrogen atom-containing binder other than the acrylic acid binder can also include a nitrogen atom-containing monomer having a side chain that contains at least one selected from the group consisting of an amino group, an aminoalkyl group, and an imide group.

The active material-containing layer may further contain a binder containing no nitrogen atom, in addition to the nitrogen atom-containing binder. Examples of the binder containing no nitrogen atom include polytetrafluoroethylene (PTFE), polyvinylidene fluoride (PVdF), fluorine-based rubber, and styrene-butadiene rubber.

The mass ratio of the nitrogen atom-containing binder to the total mass of the binder is, for example, 70% by mass or more, and preferably 100% by mass. Here, the binder means the total amount of the nitrogen atom-containing binders and the binder containing no nitrogen atoms. When the proportion of the nitrogen atom-containing binder in the binder is high, swelling of the binder due to the electrolyte can be suppressed, so that the excellent cycle life characteristics can be achieved.

The active material-containing layer may further contain carboxymethyl cellulose (CMC) or a salt of CMC as a thickener. The active material-containing layer preferably contains CMC in an amount such that the element ratio r2 described above is 0.01 to 0.3.

The conductive agent may be mixed in order to enhance current collecting performance and suppress contact resistance between the active material and the current collector. Examples of the conductive agent include carbonaceous materials such as vapor grown carbon fibers (VGCF), carbon black such as acetylene black, graphite, carbon nanofibers and carbon nanotubes. One of these may be used as a conductive agent, or two or more may be used in combination as a conductive agent. Alternatively, instead of using the conductive agent, the surface of the active material particle may be coated with carbon or an electronically conductive inorganic material.

The mixing ratio of the active material particles, the conductive agent, the nitrogen atom-containing binder, and the thickener in the active material-containing layer can be appropriately changed according to the use of the electrode. For example, the mixing ratio is as follows. The active material-containing layer contains the active material particle, the conductive agent, the nitrogen atom-containing binder, and the thickener in a proportion of preferably in ranges from 70% by mass to 96% by mass, from 2% by mass to 28% by mass, from 0.5% by mass to 15% by mass, and from 0.5% by mass to 15% by mass, respectively. These are mixed so that the total is 100% by mass. By setting the amount of the conductive agent to 2% by mass or more, the current collecting performance of the active material-containing layer can be improved. It is preferable to set the amounts of the conductive agent, the binder, and the thickener to be not more than the above-mentioned upper limits, because the capacity can be increased.

There may be used for the current collector, a material which is electrochemically stable at the potential at which lithium (Li) is inserted into and extracted from active material. For example, in the case where the electrode according to the approach acts as a negative electrode, the current collector is preferably made of copper, nickel, stainless steel, aluminum, or an aluminum alloy including one or more elements selected from the group consisting of Mg, Ti, Zn, Mn, Fe, Cu, and Si. The thickness of the current collector is preferably in the range of 5 $\mu$m to 20 $\mu$m. The current collector having such a thickness can maintain balance between the strength and weight reduction of the electrode.

The current collector may include a portion where the active material-containing layer is not formed on a surface of the current collector. This portion may serve as an electrode tab.

The electrode density (excluding the current collector) is, for example, in a range of 2.5 g/cm$^3$ to 2.9 g/cm$^3$, and preferably in a range of 2.6 g/cm$^3$ to 2.8 g/cm$^3$. When the electrode density is excessively low, an electron conductive path is insufficient, so that the entire active material particles contained in the active material layer are hardly deteriorated uniformly. Therefore, the capacity retention ratio tends to decrease when the charge-and-discharge cycle is repeated. When the electrode density is excessively high, the impregnation property of the electrolyte is poor. Therefore, the capacity retention ratio tends to decrease when the charge-and-discharge cycle is repeated.

<Method for manufacturing electrode>

An electrode according to the approach can be produced, for example, by the following method.

In order to positively coat the nitrogen atom-containing binder on the surface of the active material particle, a slurry for forming an active material-containing layer is prepared by the following procedure. First, a thickener such as CMC is dissolved in pure water to obtain a solution. Next, a nitrogen atom-containing binder and a conductive agent are dispersed in this solution to obtain a dispersion. Finally, the active material particles are added to this dispersion and stirred to obtain a slurry.

Since the nitrogen atom-containing binder has high polarity in a molecule, it has a high self-emulsifying property in pure water and has a property that it is difficult to re-aggregate even when dispersed in a solution and stirred as described above. Therefore, even if the nitrogen atom-containing binder is dispersed in the solution before adding the active material particles, the nitrogen atom-containing binder is in a good dispersed state. By adding the active material particles to the dispersion in this state, the surface of the active material particle can be uniformly and sufficiently coated with the nitrogen atom-containing binder.

In a case where the self-emulsifying property of the nitrogen atom-containing binder is insufficient, the dispersibility of the binder can be improved by dispersing the above-mentioned dispersant after adding the binder to the solution.

The case where the self-emulsifying property is insufficient is, for example, a case where the HLB value of the nitrogen atom-containing binder is less than 8.

In a case where a binder containing no nitrogen atom is used as a binder having insufficient self-emulsifying property, when the materials are mixed by the above procedure, the re-aggregation of the binder occurs by stirring. Therefore, in the active material-containing layer formed by such a slurry containing a large amount of binders, the binding property between electrode materials is insufficient. As a result, the cycle life characteristics of the obtained electrode tend to be inferior.

In the conventional method, for example, a solution in which a thickener is dissolved in pure water is prepared, and active material particles are added to this solution. After that, a conductive agent was dispersed in this dispersion, and finally a binder was added. One of the reasons for this order is that the binder used is not a nitrogen atom-containing binder but a binder having insufficient self-emulsifying property. If a binder having insufficient self-emulsifying property is added during the whole process, re-aggregation occurs by stirring. The active material particle-containing layer produced from the slurry containing the binder that has undergone re-aggregation lacks binding properties and is inferior in the cycle life characteristics. Further, when the active material particles are added immediately after the thickener is dissolved, there is a problem that a large amount of the thickener adheres to the surface of the active material particle. The surface of the active material particle to which a large amount of the thickener adheres is difficult to be coated with the nitrogen-containing binder. As a result, for example, an electrode having an element ratio r1 of less than 0.2 can be obtained. In this case, the side reaction between the active material particle and the electrolyte cannot be sufficiently suppressed, and the binding property between the materials is inferior, so that there is a problem that the cycle life characteristics are inferior. This is described in a comparative example described later, for example, Comparative Example 1.

By adding the nitrogen atom-containing binder having high self-emulsifying property to the solution before the active material particles, it is possible to prevent the re-aggregation of the binder, so that the surface of the active material particle is positively coated with the nitrogen atom-containing binder.

The prepared slurry is applied to one surface or both surfaces of the current collector. Next, the applied slurry is dried to obtain a laminate of the active material-containing layer and the current collector. Thereafter, the laminate is subjected to pressing. In this way, the electrode according to the approach can be prepared.

According to a first approach, an electrode is provided. The electrode includes an active material-containing layer including active material particles containing a niobium-titanium composite oxide and a nitrogen atom-containing binder. The spectral data obtained by performing X-ray photoelectron spectroscopy measurement on a surface of the active material-containing layer includes a first peak existing at $210 \pm 5$ eV position, a second peak existing at $458 \pm 5$ eV position, and a third peak existing at $400 \pm 5$ eV position. In the X-ray photoelectron spectroscopy measurement, an element ratio r1 of a nitrogen atom to a niobium atom and a titanium atom is within the range of 0.2 to 2. The element ratio r1 is a ratio of a peak area of the third peak ($S_3$) to a peak area of the first peak ($S_1$) and a peak area of the second peak ($S_2$) : ($S_3/ (S_1 + S_2)$).

In the active material-containing layer of this electrode, the coverage of the active material particles with the nitrogen atom-containing binder is high, the side reaction with the electrolyte can be suppressed, and the nitrogen atom-containing binder is less likely to swell with the electrolyte. Therefore, this electrode can achieve the excellent cycle life characteristics.

(Second approach)

According to the second approach, a secondary battery including a negative electrode, a positive electrode, and an electrolyte is provided. The secondary battery includes the electrode according to the first approach as the negative electrode.

The secondary battery additionally can be equipped with a separator disposed between the positive electrode and the negative electrode. The negative electrode, the positive electrode, and the separator can constitute an electrode group. The electrolyte can be held in the electrode group.

The secondary battery additionally can be equipped with a container member that houses the electrode group and the electrolyte.

Furthermore, the secondary battery additionally can be equipped with a negative electrode terminal electrically connected to the negative electrode and a positive electrode terminal electrically connected to the positive electrode.

The secondary battery can be, for example, a lithium secondary battery. The secondary battery may be a nonaqueous electrolyte secondary battery including a nonaqueous electrolyte.

Hereinafter, the negative electrode, the positive electrode, the electrolyte, the separator, the container member, the negative electrode terminal, and the positive electrode terminal will be described in detail.

**(1) Negative electrode**

A negative electrode included in the secondary battery according to the second approach may be, for example, the electrode described in the first approach. The active material-containing layer contained in this electrode may be a negative electrode active material-containing layer. The active material particles included in the electrode may be negative electrode active material particles.

**(2) Positive electrode**

The positive electrode can include a positive electrode current collector and a positive electrode active material-containing layer. The positive electrode active material-containing layer can be formed on one side or both sides of the positive electrode current collector. The positive electrode active material-containing layer can contain a positive electrode active material, and optionally a conductive agent and a binder.

Examples of the positive electrode active material include oxides and sulfides. The positive electrode may include, as the positive electrode active material, one type of compound or two or more different types of compounds. Examples of the oxides and the sulfides may include compounds allowing lithium or lithium ions to be inserted thereinto or extracted therefrom.

Examples of such compounds include manganese dioxides ($MnO_2$), iron oxides, copper oxides, nickel oxides, lithium manganese composite oxides (e.g., $Li_xMn_2O_4$ or $Li_xMnO_2$; $0 < x \leq 1$), lithium nickel composite oxides (e.g., $Li_xNiO_2$; $0 < x \leq 1$), lithium cobalt composite oxides (e.g., $Li_xCoO_2$; $0 < x \leq 1$), lithium nickel cobalt composite oxides (e.g., $Li_xNi_{1-y}Co_yO_2$; $0 < x \leq 1$, $0 < y < 1$), lithium manganese cobalt composite oxides (e.g., $Li_xMn_yCo_{1-y}O_2$; $0 < x \leq 1$, $0 < y < 1$), lithium manganese nickel composite oxides having a spinel structure (e.g., $Li_xMn_{2-y}Ni_yO_4$; $0 < x \leq 1$, $0 < y < 2$), lithium phosphates having an olivine structure (e.g., $Li_xFePO_4$; $0 < x \leq 1$, $LixFe_{1-y}Mn_yPO_4$; $0 < x \leq 1$, $0 < y < 1$, and $Li_xCoPO_4$; $0 < x \leq 1$), iron sulfates $[Fe_2(SO_4)_3]$, vanadium oxides (e.g., $V_2O_5$), and lithium nickel cobalt manganese composite oxides ($Li_xNi_{1-y-z}Co_yMn_zO_2$; $0 < x \leq 1$, $0 < y < 1$, $0 < z < 1$, $y + z < 1$).

Among the above, examples of compounds more preferable as the positive electrode active material include lithium manganese composite oxides having a spinel structure (e.g., $Li_xMn_2O_4$; $0 < x \leq 1$), lithium nickel composite oxides (e.g., $Li_xNiO_2$; $0 < x \leq 1$), lithium cobalt composite oxides (e.g., $Li_xCoO_2$; $0 < x \leq 1$), lithium nickel cobalt composite oxides (e.g., $Li_xNi_{1-y}Co_yO_2$; $0 < x \leq 1$, $0 < y < 1$), lithium manganese nickel composite oxides having a spinel structure (e.g., $Li_xMn_{2-y}Ni_yO_4$; $0 < x \leq 1$, $0 < y < 2$), lithium manganese cobalt composite oxides (e.g., $Li_xMn_yCo_{1-y}O_2$; $0 < x \leq 1$, $0 < y < 1$), lithium iron phosphates (e.g., $Li_xFePO_4$; $0 < x \leq 1$), and lithium nickel cobalt manganese composite oxides ($Li_xNi_{1-y-z}Co_yMn_zO_2$; $0 < x \leq 1$, $0 < y < 1$, $0 < z < 1$, $y + z < 1$). The positive electrode potential can be made high by using these positive electrode active materials.

When a room temperature molten salt is used as the electrolyte of the battery, it is preferable to use a positive electrode active material including lithium iron phosphate, $Li_xVPO_4F$ ($0 \leq x \leq 1$), lithium manganese composite oxide, lithium nickel composite oxide, lithium nickel cobalt composite oxide, or a mixture thereof. Since these compounds have low reactivity with room temperature molten salts, cycle life can be improved. Details regarding the room temperature molten salt are described later.

The positive electrode active material may preferably have primary particle sizes in the range of 100 nm to 1 $\mu$m. The positive electrode active material having primary particle sizes of 100 nm or more may be easy to handle in industrial applications. The positive electrode active material having primary particle sizes of 1 $\mu$m or less may allow lithium ions to be smoothly diffused in solid.

The positive electrode active material may preferably have a specific surface area in the range of 0.1 $m^2$/g to 10 $m^2$/g. The positive electrode active material having a specific surface area of 0.1 $m^2$/g or more may secure an adequately large site for insertion and extraction of Li ions. The positive electrode active material having a specific surface area of 10 $m^2$/g or less may be easy to handle in industrial applications and may ensure a favorable charge-and-discharge cycle.

The binder is blended in order to fill a gap between the dispersed positive electrode active materials and to bind the positive electrode active material and the positive electrode current collector. Examples of the binder include polytetrafluoroethylene (PTFE), polyvinylidene fluoride (PVdF), fluorine rubber, polyacrylic acid compounds, imide compounds, carboxy methyl cellulose (CMC), and salts of CMC. One of these may be used as the binder, or a combination of two or more thereof may be used as the binder.

A conductive agent is added in order to increase the current-collecting performance and suppress the contact resistance between the positive electrode active material and the positive electrode current collector. Examples of the conductive agent include carbonaceous materials such as vapor grown carbon fibers (VGCF), carbon black such as acetylene black, graphite, carbon nanofibers and carbon nanotubes. One of these materials may be used as the conductive agent, or two or more of these materials may be combined and used as the conductive agent. In addition, the conductive agent can be omitted.

In the positive electrode active material-containing layer, it is preferable to combine the positive electrode active material and the binder in a mass ratio of the positive electrode active material in a range from 80% to 98% and the binder in a range from 2% to 20%.

By making the amount of the binder be 2% by mass or greater, sufficient electrode strength is obtained. In addition, the binder may function as an insulator. For this reason, if the amount of the binder is kept at 20% by mass or less, the amount of insulation contained in the electrode is decreased, and therefore the internal resistance can be reduced.

In the case of adding the conductive agent, it is preferable to combine the positive electrode active material, the binder, and the conductive agent in a mass ratio of the positive electrode active material in a range from 77% to 95%, the binder in a range from 2% to 20%, and conductive agent in a range from 3% to 15%.

By making the amount of the conductive agent be 3% by mass or greater, the effects described above can be exhibited. Also, by keeping the amount of the conductive agent to 15% by mass or less, the proportion of the conductive agent in contact with electrolyte can be lowered. If this proportion is low, decomposition of the electrolyte under high-temperature storage can be reduced.

The positive electrode current collector is preferably an aluminum foil or an aluminum alloy foil containing one or more elements selected from Mg, Ti, Zn, Ni, Cr, Mn, Fe, Cu, and Si.

The thickness of the aluminum foil or aluminum alloy foil is preferably within a range from 5 $\mu$m to 20 $\mu$m, and is more preferably 15 $\mu$m or less. The purity of the aluminum foil is preferably 99% by mass or more. The content of transition metals such as iron, copper, nickel, and chromium contained in the aluminum foil or aluminum alloy foil is preferably 1% by mass or less.

In addition, the positive electrode current collector can include a portion where the positive electrode active material-containing layer is not formed on the surface thereof. This portion can serve as a positive electrode tab.

The positive electrode can be produced, for example, by the following method. First, an active material, a conductive agent, and a binder are suspended in a solvent to prepare a slurry. This slurry is applied to one side or both sides of the current collector. Next, the applied slurry is dried to obtain a laminate of the active material-containing layer and the current collector. Thereafter, the laminate is pressed. The positive electrode is thus produced.

Alternatively, the positive electrode may be produced by the following method. First, an active material, a conductive agent, and a binder are mixed to obtain a mixture. The mixture is then formed into pellets. Subsequently, these pellets can be arranged on the current collector to obtain a positive electrode.

(3) Electrolyte

Examples of the electrolyte may include nonaqueous liquid electrolyte or nonaqueous gel electrolyte. The nonaqueous liquid electrolyte may be prepared by dissolving an electrolyte salt used as solute in an organic solvent. The electrolyte salt may preferably have a concentration in the range of 0.5 mol/L to 2.5 mol/L.

Examples of the electrolyte salt include lithium salts such as lithium perchlorate ($LiClO_4$), lithium hexafluoro-phosphate ($LiPF_6$), lithium tetrafluoroborate ($LiBF_4$), lithium hexafluoroarsenate ($LiAsF_6$), lithium trifluoromethanesul-fonate ($LiCF_3SO_3$), and lithium bistrifluoromethylsulfonylimide [$LiN(CF_3SO_2)_2$], and mixtures thereof. The electrolyte salt is preferably resistant to oxidation even at a high potential, and most preferably $LiPF_6$.

Examples of the organic solvent include cyclic carbonates such as propylene carbonate (PC), ethylene carbonate (EC), or vinylene carbonate (VC); linear carbonates such as diethyl carbonate (DEC), dimethyl carbonate (DMC), or methyl ethyl carbonate (MEC); cyclic ethers such as tetrahydrofuran (THF), 2-methyl tetrahydrofuran (2-MeTHF), or dioxolane (DOX); linear ethers such as dimethoxy ethane (DME) or diethoxy ethane (DEE); $\gamma$-butyrolactone (GBL), acetonitrile (AN), and sulfolane (SL). These organic solvents may be used singularly or as a mixed solvent.

The gel nonaqueous electrolyte is prepared by obtaining a composite of a liquid nonaqueous electrolyte and a polymeric material. Examples of the polymeric material include polyvinylidene fluoride (PVDF), polyacrylonitrile (PAN), polyethylene oxide (PEO), and mixtures thereof.

Alternatively, besides the nonaqueous liquid electrolyte and the nonaqueous gel electrolyte, a room temperature molten salt (ionic melt) containing lithium ions, a polymer solid electrolyte, an inorganic solid electrolyte, and the like may also be used as the nonaqueous electrolyte.

The room temperature molten salt (ionic melt) indicates compounds among organic salts made of combinations of organic cations and anions, which are able to exist in a liquid state at room temperature (15°C to 25°C). The room temperature molten salt includes a room temperature molten salt which exists alone as a liquid, a room temperature molten salt which becomes a liquid upon mixing with an electrolyte salt, a room temperature molten salt which becomes a liquid when dissolved in an organic solvent, and mixtures thereof. In general, the melting point of the room temperature molten salt used in secondary batteries is 25°C or below. The organic cations generally have a quaternary ammonium framework.

A polymer solid electrolyte is prepared by dissolving an electrolyte salt into a polymer material and solidifying the result.

An inorganic solid electrolyte is solid material having Li-ion conductivity.

The electrolyte may also be an aqueous electrolyte containing water.

The aqueous electrolyte includes an aqueous solvent and an electrolyte salt. The aqueous electrolyte is liquid, for example. A liquid aqueous electrolyte is an aqueous solution prepared by dissolving an electrolyte salt as the solute in an aqueous solvent. The aqueous solvent is a solvent containing 50% or more water by volume, for example. The aqueous solvent may also be pure water.

The aqueous electrolyte may also be an aqueous gel composite electrolyte containing an aqueous electrolytic solution and a polymer material. The polymer material may be, for example, polyvinylidene fluoride (PVDF), polyacrylonitrile (PAN), or polyethylene oxide (PEO).

The aqueous electrolyte preferably contains 1 mol or greater of aqueous solvent per 1 mol of the salt as the solute. In an even more preferably aspect, the aqueous electrolyte contains 3.5 mol or greater of aqueous solvent per 1 mol of the salt as the solute.

That the aqueous electrolyte contains water can be confirmed by gas chromatography - mass spectrometry (GC-MS) measurement. Also, the salt concentration and the amount of water contained in the aqueous electrolyte can be computed by measurement using inductively coupled plasma (ICP) emission spectroscopy or the like, for example. By measuring out a prescribed amount of the aqueous electrolyte and computing the contained salt concentration, the molar concentration (mol/L) can be computed. Also, by measuring the specific gravity of the aqueous electrolyte, the number of moles of the solute and the solvent can be computed.

The aqueous electrolyte is prepared by dissolving the electrolyte salt into the aqueous solvent at a concentration from 1 to 12 mol/L for example.

To suppress electrolysis of the aqueous electrolyte, LiOH, $Li_2SO_4$, or the like can be added to adjust the pH. The pH is preferably from 3 to 13, and more preferably from 4 to 12.

(4) Separator

The separator is formed of, for example, a porous film containing polyethylene (polyethylene; PE), polypropylene (polypropylene; PP), cellulose, or polyvinylidene fluoride (PVdF), or a synthetic resin nonwoven fabric. From the viewpoint of safety, it is preferable to use a porous film formed from polyethylene or polypropylene. This is because these porous films can be melted at a predeterminedtemperature to interrupt the current.

(5) Container member

As the container member, for example, a container made of laminate film or a container made of metal may be used.

The thickness of the laminate film is, for example, 0.5 mm or less, and preferably 0.2 mm or less.

As the laminate film, used is a multilayer film including multiple resin layers and a metal layer sandwiched between the resin layers. The resin layer may include, for example, a polymeric material such as polypropylene (PP), polyethylene (PE), nylon, or polyethylene terephthalate (PET). The metal layer is preferably made of aluminum foil or an aluminum alloy foil, so as to reduce weight. The laminate film may be formed into the shape of a container member, by heat-sealing.

The wall thickness of the metal container is, for example, 1 mm or less, more preferably 0.5 mm or less, and still more preferably 0.2 mm or less.

The metal case is made, for example, of aluminum or an aluminum alloy. The aluminum alloy preferably contains elements such as magnesium, zinc, or silicon. If the aluminum alloy contains a transition metal such as iron, copper, nickel, or chromium, the content thereof is preferably 100 ppm by mass or less.

The shape of the container member is not particularly limited. The shape of the container member may be, for example, flat (thin), square, cylinder, coin, or button-shaped. The container member may be appropriately selected depending on battery size and use of the battery.

(6) Negative electrode terminal

The negative electrode terminal may be made of a material that is electrochemically stable at the potential at which Li is inserted into and extracted from the above-described negative electrode active material, and has electrical conductivity. Specific examples of the material for the negative electrode terminal include copper, nickel, stainless steel, aluminum, and aluminum alloy containing at least one element selected from the group consisting of Mg, Ti, Zn, Mn, Fe, Cu, and Si. Aluminum or aluminum alloy is preferred as the material for the negative electrode terminal. The negative electrode terminal is preferably made of the same material as the negative electrode current collector, in order to reduce the contact resistance with the negative electrode current collector.

(7) Positive electrode terminal

The positive electrode terminal may be made of, for example, a material that is electrically stable in the potential range of 3 V to 5 V (vs. Li/Li$^+$) relative to the redox potential of lithium, and has electrical conductivity. Examples of the material for the positive electrode terminal include aluminum and an aluminum alloy containing one or more selected from the group consisting of Mg, Ti, Zn, Mn, Fe, Cu, and Si. The positive electrode terminal is preferably made of the same material as the positive electrode current collector, in order to reduce contact resistance with the positive electrode current collector.

Next, the secondary battery according to the approach will be described in detail with reference to the drawings.

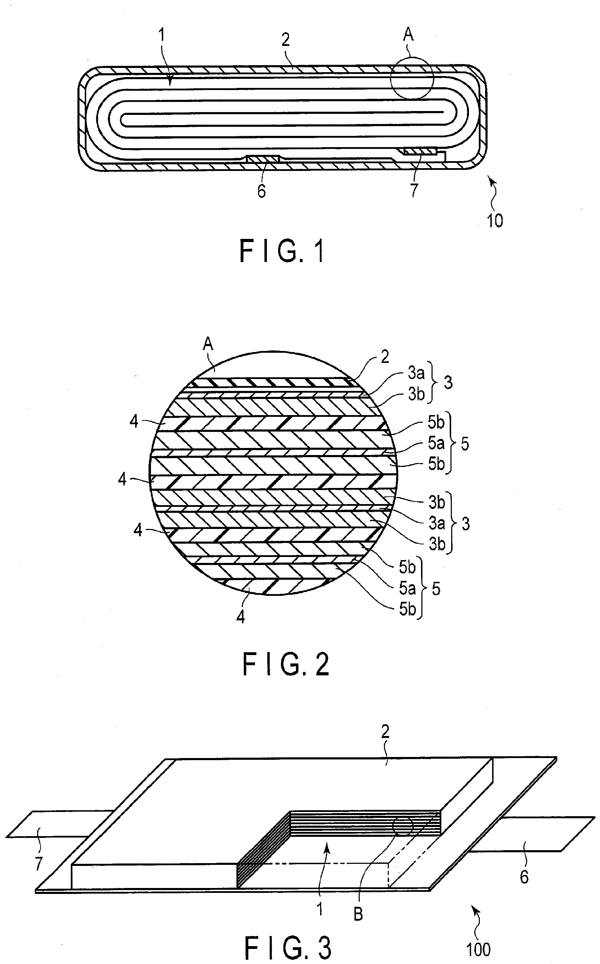

FIG. 1 is a sectional view schematically showing one example of a secondary battery according to an approach. FIG. 2 is an enlarged sectional view of a portion A of the secondary battery shown in FIG. 1.

The secondary battery 100 shown in FIG. 1 and FIG. 2 includes a bag-shaped container member 2 shown in FIG. 1, an electrode group 1 shown in FIG. 1 and FIG. 2, and an electrolyte (not shown). The electrode group 1 and the electrolyte are stored in the bag-shaped container member 2. The electrolyte (not shown) is held in the electrode group 1.

The bag-shaped container member 2 is formed from a laminate film including two resin layers and a metal layer disposed therebetween.

As shown in FIG. 1, the electrode group 1 is a flat wound electrode group. The flat wound electrode group 1 includes negative electrodes 3, separators 4, and positive electrodes 5 as shown in FIG. 2. The separator 4 is disposed between the negative electrode 3 and the positive electrode 5.

A negative electrode 3 includes a negative electrode current collector 3a and negative electrode active material-containing layers 3b. In the portion of the negative electrode 3 located at the outermost shell of a wound electrode group 1, the negative electrode active material-containing layer 3b is formed only on the inside surface side of the negative electrode current collector 3a, as shown in FIG. 2. In another portion of the negative electrode 3, the negative electrode active material-containing layer 3b is formed on both sides of the negative electrode current collector 3a.

A positive electrode 5 includes a positive electrode current collector 5a and a positive electrode active material-containing layer 5b formed on both sides thereof.

As shown in FIG. 1, a negative electrode terminal 6 and a positive electrode terminal 7 are positioned near the outer end of the wound electrode group 1. The negative electrode terminal 6 is connected to the outermost part of the negative electrode current collector 3a. In addition, the positive electrode terminal 7 is connected to the outermost part of the positive electrode current collector 5a. The negative electrode terminal 6 and the positive electrode terminal 7 extend outward from opening portions of the bag-shaped container member 2. A thermoplastic resin layer is provided on the inner surface of the bag-shaped container member 2, and the opening of the bag-shaped container member 2 are closed by thermal fusion bonding of the thermoplastic resin layer.

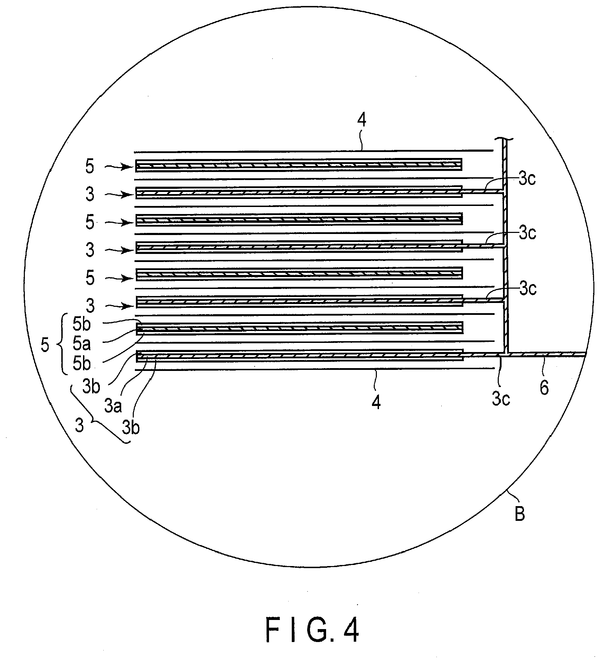

The secondary battery according to the approach is not limited to the secondary battery having the structure shown in FIGS. 1 and 2, and may be, for example, a battery having a structure shown in FIGS. 3 and 4.

FIG. 3 is a partial cut-away sectional perspective view schematically showing another example of the secondary battery according to the approach. FIG. 4 is an enlarged sectional view of a portion B of the secondary battery shown in FIG. 3.

The secondary battery 100 shown in FIGS. 3 and 4 includes an electrode group 1 shown in FIGS. 3 and 4, a container member 2 shown in FIG. 3, and an electrolyte (not shown). The electrode group 1 and the electrolyte are stored in the container member 2. The electrolyte is held in the electrode group 1.

The container member 2 is made of a laminate film including two resin layers and a metal layer intervening therebetween.

As shown in FIG. 4, the electrode group 1 is a laminated electrode group. The laminated electrode group 1 has a structure in which a negative electrode 3 and a positive electrode 5 are alternately laminated with a separator 4 intervening therebetween.

The electrode group 1 includes a plurality of the negative electrodes 3. The plurality of negative electrodes 3 are each provided with a negative electrode current collector 3a and a negative electrode active material-containing layer 3b carried on both sides of the negative electrode current collector 3a. Further, the electrode group 1 includes a plurality of the positive electrodes 5. The plurality of positive electrodes 5 are each provided with a positive electrode current collector 5a and a positive electrode active material-containing layer 5b carried on both sides of the positive electrode current collector 5a.

The negative electrode current collector 3a of each negative electrode 3 includes a portion 3c on one side where the negative electrode active material-containing layer 3b is not carried on any surfaces. This portion 3c acts as a negative electrode tab. As shown in FIG. 4, the portion 3c acting as the negative electrode tab does not overlap the positive electrode 5. In addition, a plurality of negative electrode tabs (portion 3c) is electrically connected to a belt-shaped negative electrode terminal 6. A tip of the belt-shaped negative electrode terminal 6 is drawn outward from a container member 2.

In addition, although not shown, the positive electrode current collector 5a of each positive electrode 5 includes a portion on one side where the positive electrode active material-containing layer 5b is not carried on any surfaces. This portion acts as a positive electrode tab. Like the negative electrode tab (portion 3c), the positive electrode tab does not overlap the negative electrode 3. In addition, the positive electrode tab is positioned on the opposite side of the electrode group 1 with respect to the negative electrode tab (portion 3c). The positive electrode tab is electrically connected to a belt-shaped positive electrode terminal 7. A tip of the belt-shaped positive electrode terminal 7 is positioned on the opposite side to the negative electrode terminal 6 and is drawn outward from the container member 2.

The secondary battery according to the second approach includes the electrode according to the first approach. Therefore, the secondary battery according to the second approach can achieve the excellent cycle life characteristics.

(Third approach)

According to the third approach, a battery module is provided. The battery module according to the third approach is equipped with a plurality of the secondary batteries according to the second approach.

In the battery module according to the approach, individual unit cells may be electrically connected in series or in parallel, or may be arranged in combination of series connection and parallel connection.

Next, an example of the battery module according to the approach will be described with reference to the drawings.

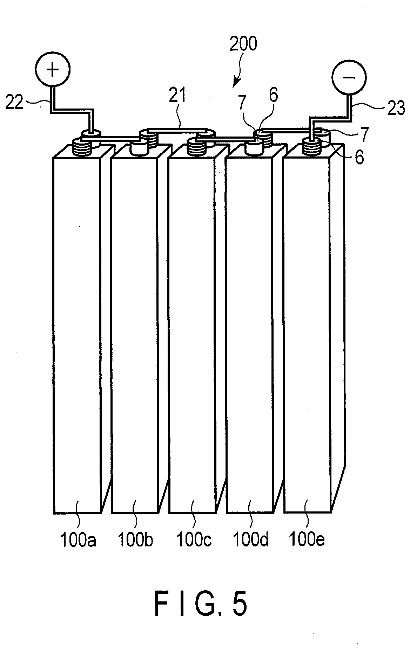

FIG. 5 is a perspective view schematically showing an example of the battery module according to the approach. The battery module 200 shown in FIG. 5 includes five unit cells 100a to 100e, four bus bars 21, a positive electrode-side lead 22, and a negative electrode-side lead 23. Each of the five unit cells 100a to 100e is the secondary battery according to the second approach.

The busbar 21 connects a negative electrode terminal 6 of a single unit cell 100a to a positive electrode terminal 7 of an adjacently positioned unit cell 100b. In this way, the five unit cells 100a to 100e are connected in series by the four bus bars 21. That is, the battery module 200 shown in FIG. 5 is a battery module of five in-series connection. Although an example is not illustrated, in a battery module containing a plurality of unit cells electrically connected in parallel, the plurality of unit cells may be electrically connected by connecting the plurality of negative electrode terminals to each other with busbars and also connecting the plurality of positive electrode terminals to each other with busbars, for example.

The positive electrode terminal 7 of at least one battery among the five unit cells 100a to 100e is electrically connected to a positive electrode lead 22 for external connection. Also, the negative electrode terminal 6 of at least one battery among the five unit cells 100a to 100e is electrically connected to a negative electrode lead 23 for external connection.

A battery module according to a third approach includes the secondary battery according to the second approach. Therefore, the battery module according to the third approach can achieve the excellent cycle life characteristics.

(Fourth approach)

According to the fourth approach, a battery pack is provided. The battery pack includes the battery module according to the third approach. The battery pack may also be equipped with a single secondary battery according to the second approach instead of the battery module according to the third approach.

The battery pack according to the approach may further include a protective circuit. The protective circuit has a function to control charging and discharging of the secondary battery. Alternatively, a circuit included in equipment where the battery pack serves as a power source (for example, electronic devices, vehicles, and the like) may be used as the protective circuit for the battery pack.

Moreover, the battery pack according to the approach may further include an external power distribution terminal. The external power distribution terminal is configured to externally output current from the secondary battery, and to input external current into the secondary battery. In other words, when the battery pack is used as a power source, the current is provided out via the external power distribution terminal. When the battery pack is charged, the charging current (including regenerative energy of a motive force of vehicles such as automobiles) is provided to the battery pack via the external power distribution terminal.

Next, an example of a battery pack according to the approach will be described with reference to the drawings.

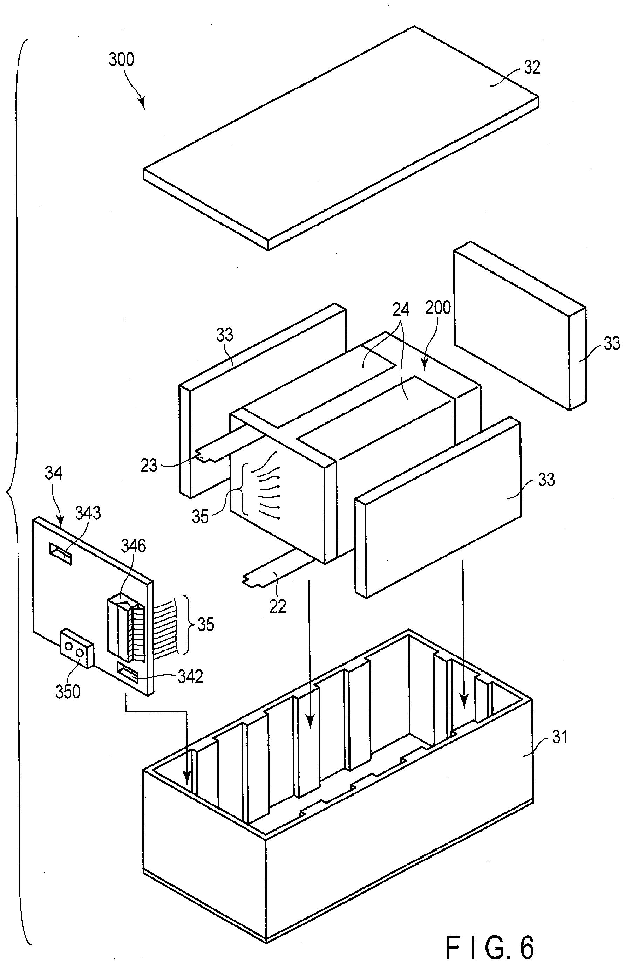

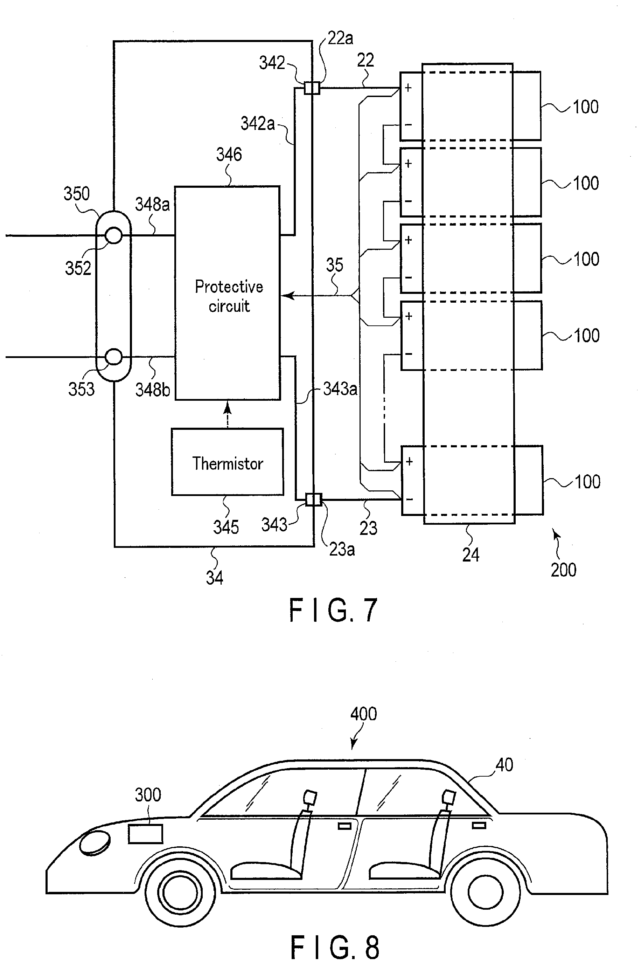

FIG. 6 is an exploded perspective view schematically showing an example of the battery pack according to the approach. FIG. 7 is a block diagram showing an example of an electric circuit of the battery pack shown in FIG. 6.

A battery pack 300 shown in FIGS. 6 and 7 includes a housing container 31, a lid 32, protective sheets 33, a battery module 200, a printed wiring board 34, wires 35, and an insulating plate (not shown).

A housing container 31 shown in FIG. 6 is a bottomed-square-shaped container having a rectangular bottom surface. The housing container 31 is configured to house protective sheet 33, a battery module 200, a printed wiring board 34, and wires 35. A lid 32 has a rectangular shape. The lid 32 covers the housing container 31 to house the battery module 200 and the like. Although not shown, opening(s) or connection terminal(s) for connecting to external device(s) and the like are provided on the housing container 31 and lid 32.

The battery module 200 includes plural unit cells 100, a positive electrode-side lead 22, a negative electrode-side lead 23, and an adhesive tape 24.

At least one in the plurality of unit cells 100 is a secondary battery according to the second approach. Each unit cell 100 in the plurality of unit cells 100 is electrically connected in series, as shown in FIG. 7. The plurality of unit cells 100 may alternatively be electrically connected in parallel, or connected in a combination of in-series connection and in-parallel connection. If the plurality of unit cells 100 is connected in parallel, the battery capacity increases as compared to a case where they are connected in series.

The adhesive tape 24 fastens the plural unit cells 100. The plural unit cells 100 may be fixed using a heat-shrinkable tape in place of the adhesive tape 24. In this case, the protective sheets 33 are arranged on both side surfaces of the battery module 200, and the heat-shrinkable tape is wound around the battery module 200 and protective sheets 33. After that, the heat-shrinkable tape is shrunk by heating to bundle the plural unit cells 100.

One terminal of a positive electrode lead 22 is connected to a battery module 200. One terminal of the positive electrode lead 22 is electrically connected to the positive electrode of one or more unit cells 100. One terminal of a negative electrode lead 23 is connected to the battery module 200. One terminal of the negative electrode lead 23 is electrically connected to the negative electrode of one or more unit cells 100.

The printed wiring board 34 is arranged on the inner surface of the housing container 31 along the short side direction. The printed wiring board 34 includes a positive electrode connector 342, a negative electrode connector 343, a thermistor 345, a protective circuit 346, wirings 342a and 343a, an external power distribution terminal 350, a plus-side wire (positive-side wire) 348a, and a minus-side wire (negative-side wire) 348b. One principal surface of the printed wiring board 34 faces one side surface of the battery module 200. An insulating plate (not shown) is disposed in between the printed wiring board 34 and the battery module 200.

The other terminal 22a of the positive electrode lead 22 is electrically connected to a positive electrode connector 342. The other terminal 23a of the negative electrode lead 23 is electrically connected to a negative electrode connector 343.

The thermistor 345 is fixed to one principal surface of the printed wiring board 34. The thermistor 345 detects the temperature of each unit cell 100 and transmits detection signals to the protective circuit 346.

The external power distribution terminal 350 is fixed to the other principal surface of the printed wiring board 34. The external power distribution terminal 350 is electrically connected to device(s) that exists outside the battery pack 300. The external power distribution terminal 350 includes a positive side terminal 352 and a negative side terminal 353.

The protective circuit 346 is fixed to the other principal surface of the printed wiring board 34. The protective circuit 346 is connected to the positive side terminal 352 via the plus-side wire 348a. The protective circuit 346 is connected to the negative side terminal 353 via the minus-side wire 348b. In addition, the protective circuit 346 is electrically connected to the positive electrode connector 342 via the wiring 342a. The protective circuit 346 is electrically connected to the negative electrode connector 343 via the wiring 343a. Furthermore, the protective circuit 346 is electrically connected to each unit cell 100 in the plurality of unit cells 100 via the wires 35.

The protective sheets 33 are arranged on both inner surfaces of the housing container 31 along the long side direction and on one inner surface of the housing container 31 along the short side direction facing the printed wiring board 34 through the battery module 200. The protective sheet 33 is made of, for example, resin or rubber.

The protective circuit 346 controls charging and discharging of the plurality of unit cells 100. The protective circuit 346 is also configured to cut off electric connection between the protective circuit 346 and the external power distribution terminal 350 (the positive side terminal 352 and the negative side terminal 353) to the external devices, based on detection signals transmitted from the thermistor 345 or detection signals transmitted from each unit cell 100 or the battery module 200.

An example of the detection signal transmitted from the thermistor 345 is a signal indicating that the temperature of the unit cell(s) 100 is detected to be a predetermined temperature or more. An example of the detection signal transmitted from each unit cell 100 or the battery module 200 is a signal indicating detection of over-charge, over-discharge, and overcurrent of the unit cell(s) 100. When detecting over-charge or the like for each of the unit cells 100, the battery voltage may be detected, or a positive electrode potential or negative electrode potential may be detected. In the latter case, a lithium electrode to be used as a reference electrode may be inserted into each unit cell 100.

Note, that as the protective circuit 346, a circuit included in a device (for example, an electronic device or an automobile) that uses the battery pack 300 as a power source may be used.

As described above, the battery pack 300 includes the external power distribution terminal 350. Hence, the battery pack 300 can output current from the battery module 200 to an external device and input current from an external device to the battery module 200 via the external power distribution terminal 350. In other words, when using the battery pack 300 as a power source, the current from the battery module 200 is supplied to an external device via the external power distribution terminal 350. When charging the battery pack 300, a charge current from an external device is supplied to the battery pack 300 via the external power distribution terminal 350. If the battery pack 300 is used as an onboard battery, the regenerative energy of the motive force of a vehicle can be used as the charge current from the external device.

Note that the battery pack 300 may include a plurality of battery modules 200. In this case, the plurality of battery modules 200 may be connected in series, in parallel, or connected in a combination of in-series connection and in-parallel connection. The printed wiring board 34 and the wires 35 may be omitted. In this case, the positive electrode lead 22 and the negative electrode lead 23 may be used as the positive side terminal and the negative side terminal of the external power distribution terminal, respectively.

Such a battery pack is used for, for example, an application required to have the excellent cycle performance when a large current is taken out. More specifically, the battery pack is used as, for example, a power source for electronic devices, a stationary battery, or an onboard battery for various kinds of vehicles. An example of the electronic device is a digital camera. The battery pack is particularly favorably used as an onboard battery.

A battery pack according to the fourth approach includes the secondary battery according to the second approach or the battery module according to the third approach. Therefore, according to the fourth approach, it is possible to provide the battery pack including the secondary battery or the battery module that can realize excellent cycle life characteristics.

(Fifth approach)

According to the fifth approach, a vehicle is provided. The vehicle includes the battery pack according to the fourth approach.

In a vehicle according to the fifth approach, the battery pack is configured, for example, to recover regenerative energy from motive force of the vehicle. The vehicle may include a mechanism configured to convert kinetic energy of the vehicle into regenerative energy.

Examples of the vehicle according to the fifth approach include two- to four-wheeled hybrid electric automobiles, two- to four-wheeled electric automobiles, electric assist bicycles, and railway cars.

In the vehicle according to the fifth approach, the installing position of the battery pack is not particularly limited. For example, the battery pack may be installed in the engine compartment of the vehicle, in rear parts of the vehicle, or under seats.

A plurality of battery packs is loaded on the vehicle according to the fifth approach. In this case, the batteries included in each of the battery packs may be electrically connected to each other in series, in parallel, or in a combination of in-series connection and in-parallel connection. For example, in the case where each battery pack includes a battery module, the battery modules may be electrically connected to each other in series, in parallel, or in a combination of in-series connection and in-parallel connection. Alternatively, in the case where each battery pack includes a single battery, each of the batteries may be electrically connected to each other in series, in parallel, or in a combination of in-series connection and in-parallel connection.

Next, one example of the vehicle according to the fifth approach will be described with reference to the drawings.

FIG. 8 is a partially transparent diagram schematically illustrating one example of a vehicle according to the approach.

A vehicle 400 illustrated in FIG. 8 includes a vehicle body 40 and a battery pack 300 according to the approach. In the example illustrated in FIG. 8, the vehicle 400 is a four-wheeled automobile.

A plurality of the battery packs 300 may be loaded on the vehicle 400. In this case, the batteries included in the battery packs 300 (for example, unit cell or battery modules) may be connected in series, connected in parallel, or connected in a combination of in-series connection and in-parallel connection.

In FIG. 8, the battery pack 300 is installed in an engine compartment located at the front of the vehicle body 40. As described above, the battery pack 300 may be installed in rear sections of the vehicle body 40, or under a seat. The battery pack 300 may be used as a power source of the vehicle 400. In addition, the battery pack 300 can recover regenerative energy of a motive force of the vehicle 400.

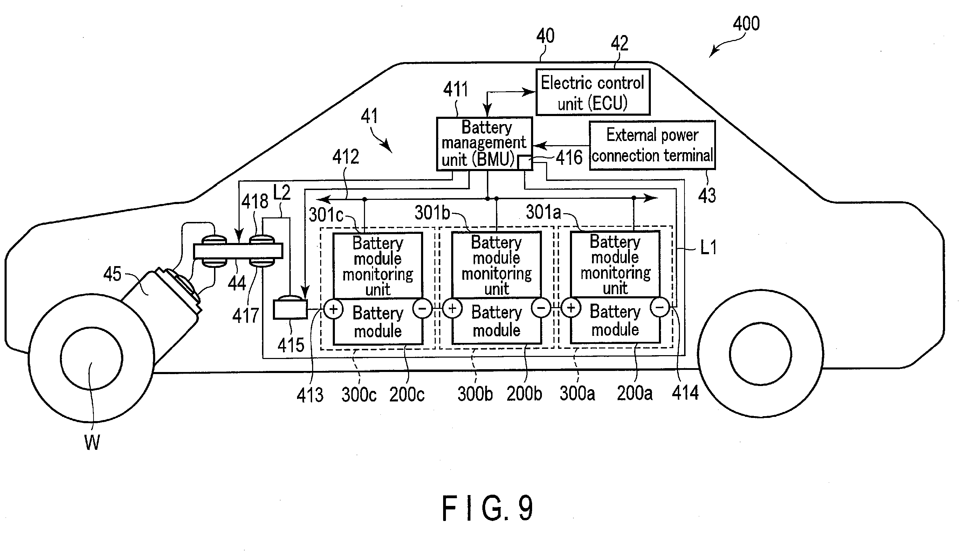

Next, an approach of the vehicle according to the fifth approach will be described with reference to FIG. 9.

FIG. 9 is a diagram schematically illustrating one example of a control system related to an electrical system in the vehicle according to the fifth approach. The vehicle 400 illustrated in FIG. 9 is an electric automobile.

The vehicle 400, shown in FIG. 9, includes a vehicle body 40, a vehicle power source 41, a vehicle ECU (electric control unit) 42, which is a master controller of the vehicle power source 41, an external terminal (an external power connection terminal) 43, an inverter 44, and a drive motor 45.

The vehicle 400 includes the vehicle power source 41, for example, in the engine compartment, in the rear sections of the automobile body, or under a seat. In FIG. 9, the position of the vehicle power source 41 installed in the vehicle 400 is schematically shown.

The vehicle power source 41 includes plural (for example, three) battery packs 300a, 300b and 300c, a battery management unit (BMU) 411, and a communication bus 412.

A battery pack 300a is provided with a battery module 200a and a battery module monitoring apparatus 301a (for example, voltage temperature monitoring (VTM)). A battery pack 300b is provided with a battery module 200b and a battery module monitoring apparatus 301b. A battery pack 300c is provided with a battery module 200c and a battery module monitoring apparatus 301c. The battery packs 300a to 300c are battery packs similar to the battery pack 300 described earlier, and the battery modules 200a to 200c are battery modules similar to the battery module 200 described earlier. The battery modules 200a to 200c are electrically connected in series. The battery packs 300a, 300b, and 300c are removable independently of each other, and each can be replaced with a different battery pack 300.

Each of the battery modules 200a to 200c includes plural battery cells connected in series. At least one of the plural battery cells is the secondary battery according to the second approach. The battery modules 200a to 200c each perform charging and discharging via a positive electrode terminal 413 and a negative electrode terminal 414.

A battery management apparatus 411 communicates with the battery module monitoring apparatus 301a to 301c, and collects information related to the voltage, temperature, and the like for each of the unit cells 100 included in the battery modules 200a to 200c included in the vehicle power source 41. With this arrangement, the battery management apparatus 411 collects information related to the maintenance of the vehicle power source 41.

The battery management apparatus 411 and the battery module monitoring apparatus 301a to 301c are connected via a communication bus 412. In the communication bus 412, a set of communication wires are shared with a plurality of nodes (the battery management apparatus 411 and one or more of the battery module monitoring apparatus 301a to 301c). The communication bus 412 is a communication bus, for example, configured in accordance with the controller area network (CAN) standard.

The battery module monitoring units 301a to 301c measure a voltage and a temperature of each battery cell in the battery modules 200a to 200c based on commands from the battery management unit 411. It is possible, however, to measure the temperatures only at several points per battery module, and the temperatures of all of the battery cells need not be measured.

The vehicle power source 41 can also have an electromagnetic contactor (for example, a switch apparatus 415 illustrated in FIG. 9) that switches the presence or absence of an electrical connection between a positive electrode terminal 413 and a negative electrode terminal 414. The switch apparatus 415 includes a pre-charge switch (not illustrated) that turns on when the battery modules 200a to 200c are charged, and a main switch (not illustrated) that turns on when the output from the battery modules 200a to 200c is supplied to the load. Each of the pre-charge switch and the main switch is provided with a relay circuit (not illustrated) that switches on or off according to a signal supplied to a coil disposed near a switching element. The electromagnetic contactor such as the switch apparatus 415 is controlled according to of control signals from the battery management apparatus 411 or the vehicle ECU 42 that controls the entire operation of the vehicle 400.

The inverter 44 converts an inputted direct current voltage to a three-phase alternate current (AC) high voltage for driving a motor. Three-phase output terminal(s) of the inverter 44 is (are) connected to each three-phase input terminal of the drive motor 45. The inverter 44 is controlled based on control signals from the battery management apparatus 411, or the vehicle ECU 42 which controls the entire operation of the vehicle. By controlling the inverter 44, the output voltage from the inverter 44 is adjusted.

The drive motor 45 is rotated by electric power supplied from the inverter 44. The driving force produced by the rotation of the drive motor 45 is transmitted to an axle (or axles) and drive wheels W via a differential gear unit for example.

The vehicle 400 also includes a regenerative brake mechanism (regenerator), though not shown. The regenerative brake mechanism rotates the drive motor 45 when the vehicle 400 is braked, and converts kinetic energy into regenerative energy, as electric energy. The regenerative energy, recovered in the regenerative brake mechanism, is inputted into the inverter 44 and converted to direct current. The converted direct current is inputted into the vehicle power source 41.

One terminal of a connection line L1 is connected to the negative electrode terminal 414 of the vehicle power source 41. The other terminal of the connection line L1 is connected to a negative electrode input terminal 417 of the inverter 44. On the connection line L1, a current detector (current detection circuit) 416 is provided inside the battery management apparatus 411 between the negative electrode terminal 414 and the negative electrode input terminal 417.

One terminal of a connection line L2 is connected to the positive electrode terminal 413 of the vehicle power source 41. The other terminal of the connection line L2 is connected to a positive electrode input terminal 418 of the inverter 44. On the connection line L2, the switch apparatus 415 is provided between the positive electrode terminal 413 and the positive electrode input terminal 418.

The external terminal 43 is connected to the battery management apparatus 411. The external terminal 43 can be connected to, for example, an external power source.

The vehicle ECU 42 cooperatively controls the vehicle power source 41, the switch apparatus 415, the inverter 44, and the like together with other management apparatus and control apparatus, including the battery management apparatus 411, in response to operation input from a driver or the like. By the cooperative control by the vehicle ECU 42 and the like, the output of electric power from the vehicle power source 41, the charging of the vehicle power source 41, and the like are controlled, and the vehicle 400 is managed as a whole. Data related to the maintenance of the vehicle power source 41, such as the remaining capacity of the vehicle power source 41, is transferred between the battery management apparatus 411 and the vehicle ECU 42 by a communication line.

A vehicle according to the fifth approach includes the battery pack according to the fourth approach. Therefore, according to the fifth approach, it is possible to provide the vehicle including the battery pack that can realize excellent cycle life characteristics.

[Examples]

Although Examples will be described hereinafter, the approaches are not limited to Examples to be described hereinafter.

(Example 1)

<Production of electrode>

As the active material, particles of a niobium-titanium composite oxide ($Nb_2TiO_7$; NTO) having an average particle diameter $D_{50}$ of 10 $\mu$m were prepared. As the materials of the active material-containing layer, the active material particles, acetylene black powder as a conductive agent, carboxymethyl cellulose (CMC) ammonium salt powder as a thickener, and a urethane-based binder having a HLB value of 11 as a nitrogen atom-containing binder were used. The mixing ratio of these materials was NTO : acetylene black : CMC : urethane-based binder = 9 3 :5 : 1 : 1 by mass ratio. A slurry was prepared by mixing these materials in the following order while stirring pure water as a solvent. After the carboxymethyl cellulose ammonium salt was dissolved in pure water, a urethane-based binder was further mixed to obtain a dispersion. Acetylene black was dispersed in this dispersion, and finally NTO particles were dispersed therein, followed by stirring to obtain a slurry. The obtained slurry was applied to one surface of an aluminum alloy foil (purity: 99.3%) having a thickness of 15 $\mu$m, and the coating film was dried to obtain a laminate including a current collector and an active material-containing layer. The laminate was pressed to produce an electrode having a thickness of 59 $\mu$m and an electrode density of 2.5 g/cm$^3$ of the active material-containing layer.

<Production of electrochemical measurement cell>

As an electrolytic solution for measurement, first, ethylene carbonate (EC) and diethyl carbonate (DEC) were mixed at a volume ratio of 1 : 2 to prepare a mixed solvent. In this mixed solvent, $LiPF_6$ was dissolved was dissolved at a concentration of 1 M (mol/L) to prepare a nonaqueous electrolyte.

A measurement cell was prepared using the electrode, counter electrode, and nonaqueous electrolyte prepared above. A metal lithium foil was used for the counter electrode.

In addition, in this measurement cell, since the lithium metal is used as the counter electrode, the electrode potential of the electrode using the niobium-titanium composite oxide becomes noble as compared with the counter electrode. Therefore, the electrode using the niobium-titanium composite oxide is operated as the positive electrode. However, it is of course possible to operate this electrode as a negative electrode by combining with the positive electrode material exemplified in the approach. The charging/discharging direction in this measurement cell is opposite to that in the case of a battery including an electrode using a niobium-titanium composite oxide in the negative electrode. Here, in order to avoid confusion, the direction in which lithium ions are inserted into the electrode using the niobium-titanium composite oxide is collectively referred by the name of charging and the direction of extract is collectively referred by the name of discharging.

(Examples 2 to 8)

An electrode and a measurement cell were produced in the same manner as described in Example 1 except that the mixing amount of the nitrogen atom-containing binder in the active material-containing layer was changed.

(Examples 9 to 16)

An electrode and a measurement cell were produced in the same manner as described in Example 4 except that the mixing amount of CMC as a thickener in the active material-containing layer was changed.

(Example 17)

An electrode and a measurement cell were produced in the same manner as described in Example 4, except that a urethane-based binder having a HLB value of 3 was used as the nitrogen atom-containing binder, and polyvinylpyrrolidone (PVP) as a dispersant when preparing a slurry for forming an active material-containing layer was further added by the amount of 0.5% by mass relative to the mass of the urethane-based binder. The dispersant was added at the same time when the urethane-based binder was added to the solution containing CMC.

(Examples 18 to 20)

An electrode and a measurement cell were produced in the same manner as described in Example 4, except that an acrylic acid binder having a HLB value of 9 was used as the nitrogen atom-containing binder, and the mixing amount of the acrylic acid binder was changed as shown in Table 1. The acrylic acid binder contained a monomer containing an amino group and a monomer containing an imide group.

(Example 21)

An electrode and a measurement cell were produced in the same manner as described in Example 18, except that an acrylic acid binder having a HLB value of 2 was used as the nitrogen atom-containing binder, and polyvinylpyrrolidone (PVP) as a dispersant when preparing a slurry for forming an active material-containing layer was further added by the amount of 0.5% by mass relative to the mass of the acrylic acid binder. The dispersant was added at the same time when the acrylic acid binder was added to the solution containing CMC.

(Examples 22 to 24)

An electrode and a measurement cell were produced in the same manner as described in Example 4, except that an acrylonitrile-based binder having a HLB value of 10 was used as the nitrogen atom-containing binder, and the mixing amount of the acrylonitrile-based binder was changed as shown in Table 1.

(Example 25)

An electrode and a measurement cell were produced in the same manner as described in Example 22, except that an acrylonitrile-based binder having a HLB value of 3 was used as the nitrogen atom-containing binder, and polyvinylpyrrolidone (PVP) as a dispersant when preparing a slurry for forming an active material-containing layer was further added by the amount of 0.5% by mass relative to the mass of the acrylonitrile-based binder. The dispersant was added at the same time when the acrylonitrile-based binder was added to the solution containing CMC.

(Examples 26 to 28)

An electrode and a measurement cell were produced in the same manner as described in Example 4, except that a copolymer of acrylic acid and acrylonitrile having a HLB value of 13 was used as the nitrogen atom-containing binder, and the mixing amount of the copolymer was changed as shown in Table 1.

(Example 29)

An electrode and a measurement cell were produced in the same manner as described in Example 26, except that a copolymer of acrylic acid and acrylonitrile having a HLB value of 2 was used as the nitrogen atom-containing binder, and polyvinylpyrrolidone (PVP) as a dispersant when preparing a slurry for forming an active material-containing layer was further added by the amount of 0.5% by mass relative to the mass of the copolymer of acrylic acid and acrylonitrile. The dispersant was added at the same time when the copolymer of acrylic acid and acrylonitrile was added to the solution containing CMC.

(Comparative Example 1)

An electrode and a measurement cell were produced in the same manner as described in Example 4 except that the procedure for producing the slurry was changed to the following procedure at the time of producing the electrode.

First, a carboxymethyl cellulose ammonium salt was dissolved in pure water. Next, acetylene black was dispersed in this solution, and subsequently, niobium-titanium composite oxide particles were dispersed. Finally, the urethane-based binder was dispersed to obtain a slurry.

(Comparative Example 2)

An electrode and a measuring cell were produced in the same method as described in Example 4, except that styrene-butadiene rubber (SBR) was used instead of the urethane-based binder.

(Comparative Example 3)

An electrode and a measuring cell were produced in the same method as described in Comparative Example 1, except that styrene-butadiene rubber (SBR) was used instead of the urethane-based binder.

(Comparative Example 4)

An electrode and a measurement cell were produced in the same manner as described in Example 1 except that the mass of the urethane-based binder in the mass of the active material-containing layer was changed to 0.2% by mass.

(Comparative Example 5)

An electrode and a measurement cell were produced in the same manner as described in Example 1 except that the mass of the urethane-based binder in the mass of the active material-containing layer was changed to 20% by mass.

(Comparative Example 6)

An electrode and a measurement cell were produced in the same manner as described in Example 4, except that $Li_4Ti_5O_{12}$ having an average particle diameter $D_{50}$ of 0.8 $\mu$m was used instead of $Nb_2TiO_7$ as an active material.

<X-ray photoelectron spectroscopy (XPS) measurement>

XPS measurement was performed on the electrodes produced in each example according to the method described in the first approach, and the element ratio r1 and the element ratio r2 were obtained.

FIG. 10 illustrates the spectral data for Example 1, Comparative Example 1, and Comparative Example 2. The spectral data illustrated in FIG. 10 is data obtained by performing smoothing and horizontal axis correction according to the method described in the first approach, and shows binding energy [eV] on the horizontal axis and intensity [c/s] on the vertical axis. As illustrated in FIG. 10, the spectral data according to Example 1, Comparative Example 1, and Comparative Example 2 includes the first peak, the second peak, the third peak, and the fourth peak, respectively.

For each example, the peak areas of the first peak, the second peak, the third peak, and the fourth peak are calculated, and from the calculated value, the element ratio r1 of the nitrogen atom to the niobium atom and the titanium atom, and the element ratio r2 of the sodium atom to the niobium atom and the titanium atom were calculated. The element ratio r1 of the electrode according to Example 1 was 0.2, and the element ratio r2 was 0.28. The element ratio r1 of the electrode according to Comparative Example 1 was 0.18, and the element ratio r2 was 0.31. The element ratio r1 of the electrode according to Comparative Example 2 was 0.09, and the element ratio r2 was 0.35.

<Evaluation of life characteristics>

The electrochemical measurement cell produced in each example was evaluated for life characteristics by the following procedure.

Charging and discharging was performed under the conditions that a potential range was 1.0 V to 3.0 V based on the metal lithium electrode, a charging and discharging current value was 0.5 mA/cm$^2$, and the ambient temperature was 45°C. In the charging and discharging, first, the battery is charged to 1.0 V and then discharged to 3.0 V. This was regarded as a charge-and-discharge cycle, and the initial discharge capacity was measured. This charge-and-discharge cycle was repeated 100 times, and the discharge capacity after 100 cycles was measured. Then, the discharge capacity after 100 cycles was divided by the initial discharge capacity and multiplied by 100 to evaluate the capacity retention ratio after 100 cycles in percentage. The capacity retention ratio after 100 cycles is an index for evaluating the cycle life characteristics.

The results obtained are summarized in Table 1 below. In Table 1 and Table 2 described later, "Arethane-based" indicates that it is a urethane-based binder, "Acrylic acid" indicates that it is an acrylic acid binder, "Acrylonitrile" indicates that it is an acrylonitrile-based binder, and "SBR" indicates a styrene butadiene rubber. Further, the column of "binder mixture amount (% by mass)" indicates the mass ratio of the binder in the active material layer. The column of "CMC mixture amount (% by mass)" indicates the mass ratio of CMC in the active material layer. The above-mentioned element ratio r1 is indicated in the column "r1". The above-mentioned element ratio r2 is indicated in the column "r2". The column of "cycle capacity retention ratio (%)" indicates the cycle capacity retention ratio measured in the above-mentioned life characteristic evaluation.

[Table 1]

| Table 1 | Active material | Binder types | HLB value | Mixing amount of binder (% by mass) | Mixing amount of CMC (% by mass) | r1 | r2 | Cycle capacity retention ratio (%) |
|---|---|---|---|---|---|---|---|---|
| Example 1 | $Nb_2TiO_7$ | Urethane-based | 11 | 1 | 1 | 0.2 | 0.28 | 79 |
| Example 2 | $Nb_2TiO_7$ | Urethane-based | 11 | 1.5 | 1 | 0.25 | 0.27 | 84 |
| Example 3 | $Nb_2TiO_7$ | Urethane-based | 11 | 1.8 | 1 | 0.38 | 0.25 | 84 |
| Example 4 | $Nb_2TiO_7$ | Urethane-based | 11 | 2 | 1 | 0.56 | 0.21 | 83 |
| Example 5 | $Nb_2TiO_7$ | Urethane-based | 11 | 2.4 | 1 | 0.84 | 0.2 | 79 |
| Example 6 | $Nb_2TiO_7$ | Urethane-based | 11 | 5 | 1 | 1.19 | 0.19 | 75 |
| Example 7 | $Nb_2TiO_7$ | Urethane-based | 11 | 7 | 1 | 1.77 | 0.17 | 74 |
| Example 8 | $Nb_2TiO_7$ | Urethane-based | 11 | 10 | 1 | 1.95 | 0.15 | 73 |
| Example 9 | $Nb_2TiO_7$ | Urethane-based | 11 | 2 | 0.25 | 0.56 | 0.01 | 71 |
| Example 10 | $Nb_2TiO_7$ | Urethane-based | 11 | 2 | 0.5 | 0.55 | 0.05 | 74 |
| Example 11 | $Nb_2TiO_7$ | Urethane-based | 11 | 2 | 0.6 | 0.57 | 0.11 | 75 |
| Example 12 | $Nb_2TiO_7$ | Urethane-based | 11 | 2 | 0.8 | 0.56 | 0.16 | 77 |
| Example 13 | $Nb_2TiO_7$ | Urethane-based | 11 | 2 | 2 | 0.56 | 0.25 | 73 |
| Example 14 | $Nb_2TiO_7$ | Urethane-based | 11 | 2 | 3 | 0.55 | 0.29 | 70 |
| Example 15 | $Nb_2TiO_7$ | Urethane-based | 11 | 2 | 0.1 | 0.55 | 0.005 | 65 |
| Example 16 | $Nb_2TiO_7$ | Urethane-based | 11 | 2 | 5 | 0.57 | 0.5 | 61 |
| Example 17 | $Nb_2TiO_7$ | Urethane-based (non-self-emulsifying type) | 3 | 2.8 | 0.7 | 0.25 | 0.24 | 70 |
| Example 18 | $Nb_2TiO_7$ | Acrylic acid | 9 | 2 | 1 | 0.57 | 0.2 | 84 |
| Example 19 | $Nb_2TiO_7$ | Acrylic acid | 9 | 8 | 1 | 1.97 | 0.21 | 74 |
| Example 20 | $Nb_2TiO_7$ | Acrylic acid | 9 | 1 | 1 | 0.21 | 0.19 | 80 |
| Example 21 | $Nb_2TiO_7$ | Acrylic acid (non-self-emulsifying type) | 2 | 2.8 | 0.7 | 0.28 | 0.25 | 71 |
| Example 22 | $Nb_2TiO_7$ | Acrylonitrile | 10 | 2 | 1 | 0.58 | 0.2 | 82 |
| Example 23 | $Nb_2TiO_7$ | Acrylonitrile | 10 | 8 | 1 | 1.99 | 0.21 | 73 |
| Example 24 | $Nb_2TiO_7$ | Acrylonitrile | 10 | 1 | 1 | 0.21 | 0.19 | 79 |
| Example 25 | $Nb_2TiO_7$ | Acrylonitrile (non-self-emulsifying type) | 3 | 2.8 | 0.7 | 0.31 | 0.19 | 69 |

(continued)

| Table 1 | Active material | Binder types | HLB value | Mixing amount of binder (% by mass) | Mixing amount of CMC (% by mass) | r1 | r2 | Cycle capacity retention ratio (%) |
|---|---|---|---|---|---|---|---|---|
| Example 26 | $Nb_2TiO_7$ | Copolymer of acrylic acid and acrylonitrile | 13 | 2 | 1 | 0.55 | 0.2 | 79 |
| Example 27 | $Nb_2TiO_7$ | Copolymer of acrylic acid and acrylonitrile | 13 | 8 | 1 | 1.98 | 0.21 | 71 |
| Example 28 | $Nb_2TiO_7$ | Copolymer of acrylic acid and acrylonitrile | 13 | 1 | 1 | 0.22 | 0.19 | 74 |
| Example 29 | $Nb_2TiO_7$ | Copolymer of acrylic acid and acrylonitrile (non-self-emulsifying type) | 2 | 2.8 | 0.7 | 0.29 | 0.23 | 68 |
| Comparative Example 1 | $Nb_2TiO_7$ | Urethane-based | 11 | 2 | 1 | 0.18 | 0.31 | 49 |
| Comparative Example 2 | $Nb_2TiO_7$ | SBR | 9 | 2 | 1 | 0.09 | 0.35 | 45 |
| Comparative Example 3 | $Nb_2TiO_7$ | SBR* | 9 | 2 | 1 | 0.05 | 0.41 | 41 |
| Comparative Example 4 | $Nb_2TiO_7$ | Urethane-based | 11 | 0.2 | 1 | 0.13 | 0.33 | 52 |
| Comparative Example 5 | $Nb_2TiO_7$ | Urethane-based | 11 | 20 | 1 | 4.1 | 0.14 | 44 |
| Comparative Example 6 | $Li_4Ti_5O_{12}$ | Urethane-based | 11 | 2 | 1 | 0.1 | 0.18 | 55 |
| *SBR is dispersed in slurry after active material particles | | | | | | | | |

(Example 30)

A secondary battery was produced as described below.

<Production of negative electrode>

An electrode was produced in the same method as described in Example 4, and was used as the negative electrode according to Example 30.

<Production of positive electrode>

93% by mass of $LiNi_{0.5}Co_{0.2}Mn_{0.3}O_2$ composite oxide (NCM523) having an average particle diameter of primary particles of 2 $\mu$m as a positive electrode active material, 4% by mass of graphite powder as a conductive agent, and 3% by mass of PVdF as a binder were mixed and dispersed in a N-methyl-2-pyrrolidone (NMP) solvent to prepare a slurry. The above mixing amounts are each mass with respect to the mass of the positive electrode active material-containing layer. After that, the slurry was applied to both surfaces of a 15 $\mu$m thick aluminum alloy foil (purity 99%) and dried to obtain a laminate. This laminate was pressed to produce a positive electrode having a positive electrode layer having a thickness of 40 $\mu$m on one side and an electrode density of 3.2 g/cm$^3$.

<Production of nonaqueous electrolyte>

Propylene carbonate and diethyl carbonate were mixed at a volume ratio of 1 : 2 to prepare a mixed solvent. In this mixed solvent, $LiPF_6$ was dissolved was dissolved at a concentration of 1 M (mol/L) to prepare a nonaqueous electrolyte.

<Production of secondary battery>

A positive electrode obtained above, a separator that is a nonwoven fabric having a thickness of 20 $\mu$m, and a negative electrode that is the electrode according to Example 4 were laminated to obtain a laminate so that the positive electrode active material-containing layer and the negative electrode active material-containing layer face each other through a separator. Then, the laminate was spirally wound so that the negative electrode was located at the outermost periphery, to produce an electrode group. By heating and pressing this laminate at 90°C, a flat electrode group was produced. The obtained electrode group was housed in a thin metal can made of stainless steel having a thickness of 0.25 mm. This metal can is equipped with a valve that leaks gas when the internal pressure reaches 2 atm or higher. A secondary battery was produced by injecting nonaqueous electrolyte into this metal can.

(Example 31)

A secondary battery was produced in the same manner as described in Example 30, except that an electrode produced in the same manner as described in Example 18 was used as a negative electrode.

(Example 32)

A secondary battery was produced in the same manner as described in Example 30, except that an electrode produced in the same manner as described in Example 22 was used as a negative electrode.

(Example 33)

A secondary battery was produced in the same manner as described in Example 30, except that an electrode produced in the same manner as described in Example 26 was used as a negative electrode.

(Comparative Example 7)

A secondary battery was produced in the same manner as described in Example 30, except that an electrode produced in the same manner as described in Comparative Example 1 was used as a negative electrode.

<X-ray photoelectron spectroscopy (XPS) measurement>

XPS measurement was performed on the negative electrodes produced in Examples 30 to 33 and Comparative Example 7 according to the method described in the first approach, and the element ratio r1 and the element ratio r2 were obtained.

<Evaluation of life characteristics>

With respect to the secondary batteries produced in Examples 30 to 33 and Comparative Example 7, the life characteristics were evaluated in the same manner as the above <Evaluation of life characteristics>.
The results obtained are summarized in Table 2 below.

[Table 2]

| Table 2 | Positive electrode active material | Negative electrode active material | Binder types | HLB value | Mixing amount of binder (% by mass) | Mixing amount of CMC (% by mass) | r1 | r2 | Cycle capacity retention ratio (%) |
|---|---|---|---|---|---|---|---|---|---|
| Example 30 | NCM523 | $Nb_2TiO_7$ | Urethane-based | 11 | 2 | 1 | 0.56 | 0.19 | 98 |
| Example 31 | NCM523 | $Nb_2TiO_7$ | Acrylic acid | 9 | 2 | 1 | 0.55 | 0.21 | 99 |
| Example 32 | NCM523 | $Nb_2TiO_7$ | Acrylonitrile | 10 | 2 | 1 | 0.57 | 0.21 | 98 |
| Example 33 | NCM523 | $Nb_zTiO_7$ | Copolymer of acrylic acid and acrylonitrile | 13 | 2 | 1 | 0.56 | 0.19 | 99 |
| Comparative Example 7 | NCM523 | $Nb_2TiO_7$ | Urethane-based | 11 | 2 | 1 | 0.18 | 0.31 | 89 |

From Table 1 and Table 2, the following can be understood.

Excellent cycle life characteristics was able to be achieved for both the measurement cell and the secondary battery in a case where the element ratio r1 was within the range of 0.2 to 2.

As described in Examples 1 to 8, when the element ratio r1 increases, the element ratio r2 tends to decrease. It is considered that this is because that as the nitrogen atom-containing coating existing on the surface of the active material-containing layer (surface of active material particle) becomes thicker, the CMC containing a sodium atom present on the surface decreases. From Examples 1 to 8, it can be seen that the element ratio r1 is not preferable if it is too low and is not preferable if it is too high. It can be seen that a better capacity retention ratio was able to be achieved when the element ratio r1 was within the range of 0.25 to 1.5.

With reference to Examples 9 to 16, it can be seen that the element ratio r2 is not preferable if it is too low and is not preferable if it is too high. For example, as described in Examples 9 to 14, when the element ratio r2 is within the range of 0.01 to 0.3, the cycle life characteristics tend to be excellent. It is considered that the active material-containing layer having the element ratio r2 within this range is sufficiently filled with the electrolytic solution, so that the deterioration of the life characteristics is suppressed.

As described in Examples 18 to 29, the cycle life characteristics were excellent even if the kind of the nitrogen atom-containing binder was changed.

As described in Examples 17, 21, 25, and 29, even in a case of using a nitrogen atom-containing binder having low self-emulsifying property, a dispersant is further added for the purpose of enhancing the dispersibility of the binder. As a result, the coverage of the nitrogen atom-containing binder on the surface of the active material particle is enhanced, so that the element ratio r1 can be within the range of 0.2 to 2. However, since the interaction between the binder and the dispersant interferes with the interaction between the active material and the binder, the interaction between niobium contained in the active material particle and nitrogen contained in the binder may be weakened. Therefore, for example, as described in the comparison of Examples 4 and 5 with Example 17, the element ratio r1 tends to be low in Example 17, as compared with the case where a binder having a high HLB value is used.

As described in Comparative Example 1, when the active material particles are added immediately after the addition of the thickener to pure water, the element ratio r1 becomes less than 0.2 even when the nitrogen atom-containing binder is used as a binder. The reason for this is considered that as described above, CMC as a thickener is apt to adhere to the surfaces of the active material particles, so that the coating amount of the nitrogen atom-containing binder decreases.

As described in Comparative Examples 2 and 3, in a case where styrene-butadiene rubber was used as a binder, the capacity retention ratio was inferior even if the order in which the electrode material was added to the slurry was changed.

As described in Comparative Examples 4 and 5, in a case where the element ratio r1 was outside the range of 0.2 to 2, the capacity retention ratio was inferior.

As described in Comparative Example 6, in a case where a lithium titanium composite oxide was used as the active material instead of the niobium-titanium composite oxide, the element ratio r1 was not within the range of 0.2 to 2, and the capacity retention ratio was inferior.

As shown in Table 2, even in the secondary battery in which the electrode according to the approach operates as a negative electrode instead of the electrochemical measurement cell, the excellent cycle life characteristics was able to be achieved for the secondary battery in the case where the element ratio r1 was within the range of 0.2 to 2.

According to at least one approach and example described above, the electrode is provided. The electrode includes an active material-containing layer including active material particles containing a niobium-titanium composite oxide and a nitrogen atom-containing binder. The spectral data obtained by performing X-ray photoelectron spectroscopy measurement on a surface of the active material-containing layer includes a first peak existing at $210 \pm 5$ eV position, a second peak existing at $458 \pm 5$ eV position, and a third peak existing at $400 \pm 5$ eV position. In the X-ray photoelectron spectroscopy measurement, an element ratio r1 of a nitrogen atom to a niobium atom and a titanium atom is within the range of 0.2 to 2. The element ratio r1 is a ratio of a peak area of the third peak ($S_3$) to a peak area of the first peak ($S_1$) and a peak area of the second peak ($S_2$) : ($S3 / (S_1 + S_2)$).

The coverage of the active material particles with the nitrogen atom-containing binder is high, the side reaction with the electrolyte can be suppressed, and the nitrogen atom-containing binder is less likely to swell with the electrolyte. Therefore, this electrode can achieve the excellent cycle life characteristics.

The present disclosure also encompasses the following approaches:

1. An electrode (3) comprising:

an active material-containing layer (3b) comprising active material particles comprising a niobium-titanium composite oxide and a nitrogen atom-containing binder,
wherein a spectral data obtained by performing X-ray photoelectron spectroscopy measurement on a surface of the active material-containing layer (3b) comprises a first peak existing at 210 $\pm$ 5 eV position, a second peak existing at 458 $\pm$ 5 eV position, and a third peak existing at 400 $\pm$ 5 eV position,

in the X-ray photoelectron spectroscopy measurement, an element ratio r1 of a nitrogen atom to a niobium atom and a titanium atom is within a range of 0.2 to 2, and

the element ratio r1 is a ratio of a peak area of the third peak ($S_3$) to a peak area of the first peak($S_1$) and a peak area of the second peak($S_2$): ($S_3 / (S_1 + S_2)$).

2. The electrode (3) according to clause 1,

wherein the spectral data further comprises a fourth peak existing at 1072 $\pm$ 5 eV position,

in the X-ray photoelectron spectroscopy measurement, an element ratio r2 of a sodium atom to the niobium atom and the titanium atom is within a range of 0.01 to 0.3, and

the element ratio r2 is a ratio of a peak area of the fourth peak ($S_4$) to a peak area of the first peak ($S_1$) and a peak area of the second peak ($S_2$) : ($S_4 / (S_1 + S_2)$) .

3. The electrode (3) according to clause 1 or 2, wherein the element ratio r1 is within a range of 0.25 to 1.5.

4. The electrode (3) according to clause 2, wherein the element ratio r2 is within a range of 0.05 to 0.25.

5. The electrode (3) according to any one of clauses 1 to 4, wherein a hydrophilic-lipophilic balance (HLB) value of the nitrogen atom-containing binder is within a range of 8 to 14.

6. The electrode (3) according to any one of clauses 1 to 5, wherein the nitrogen atom-containing binder is at least one selected from the group consisting of an acrylic acid binder, an acrylonitrile-based binder, an acrylic acid/acrylonitrile copolymer binder, and a urethane-based binder.

7. The electrode (3) according to any one of clauses 1 to 6, wherein a mass ratio of the nitrogen atom-containing binder to a mass of the active material-containing layer (3b) is within a range of 0.5% by mass to 15% by mass.

8. The electrode (3) according to any one of clauses 1 to 7, wherein the active material-containing layer (3b) further comprises carboxymethyl cellulose.

9. The electrode (3) according to any one of clauses 1 to 8, wherein the niobium-titanium composite oxide is a monoclinic niobium-titanium composite oxide,

the monoclinic niobium-titanium composite oxide is at least one selected from the group consisting of a composite oxide represented by General Formula $Li_xTi_{1-y}Ml_yNb_{2-z}M2_zO_{7+\delta}$, and a composite oxide represented by General Formula $Li_xTi_{1-y}M3_{y+z}Nb_{2-z}O_{7-\delta}$,

where M1 is at least one selected from the group consisting of Zr, Si, and Sn, M2 is at least one selected from the group consisting of V, Ta, and Bi, and M3 is at least one selected from the group consisting of Mg, Fe, Ni, Co, W, Ta, and Mo, and

x satisfies $0 \leq x \leq 5$, y satisfies $0 \leq y < 1$, z satisfies $0 \leq z < 2$, and $\delta$ satisfies $-0.3 \leq \delta \leq 0.3$.

10. A secondary battery (100) comprising:

a positive electrode (5);
a negative electrode (3); and
an electrolyte,
wherein
the negative electrode (3) is the electrode (3) according to any one of clauses 1 to 9.

11. A battery pack (300) comprising the secondary battery (100) according to clause 10.

12. The battery pack (300) according to clause 11, further comprising:

an external power distribution terminal (350); and
a protective circuit (346).

13. The battery pack (300) according to clause 11 or 12, comprising a plurality of the secondary battery (100),

wherein the secondary batteries (100) are electrically connected in series, in parallel, or in series and parallel in combination.

14. A vehicle (400) comprising the battery pack (300) according to any one of clauses 11 to 13.

15. The vehicle (400) according to clause 14, comprising a mechanism configured to convert kinetic energy of the vehicle (400) into regenerative energy.

While certain approaches have been described, these approaches have been presented by way of example only, and are not intended to limit the scope of the claims. Indeed, the novel electrodes described herein may be embodied in a variety of other forms; furthermore, various omissions, substitutions and changes in the form of the electrodes described herein may be made.

**Claims**

1. An electrode (3) comprising:

   an active material-containing layer (3b) comprising active material particles comprising a niobium-titanium composite oxide and a nitrogen atom-containing binder,
   wherein a spectral data obtained by performing X-ray photoelectron spectroscopy measurement on a surface of the active material-containing layer (3b) comprises a first peak existing at 210 ± 5 eV position, a second peak existing at 458 ± 5 eV position, and a third peak existing at 400 ± 5 eV position,
   in the X-ray photoelectron spectroscopy measurement, an element ratio r1 of a nitrogen atom to a niobium atom and a titanium atom is within a range of 0.2 to 2, and
   the element ratio r1 is a ratio of a peak area of the third peak ($S_3$) to a peak area of the first peak ($S_1$) and a peak area of the second peak ($S_2$) : ($S_3$ / ($S_1$ + $S_2$)).

2. The electrode (3) according to claim 1,
   wherein the spectral data further comprises a fourth peak existing at 1072 ± 5 eV position,
   in the X-ray photoelectron spectroscopy measurement, an element ratio r2 of a sodium atom to the niobium atom and the titanium atom is within a range of 0.01 to 0.3, and
   the element ratio r2 is a ratio of a peak area of the fourth peak ($S_4$) to a peak area of the first peak ($S_1$) and a peak area of the second peak ($S_2$): ($S_4$ / ($S_1$ + $S_2$)).

3. The electrode (3) according to claim 1 or 2, wherein the element ratio r1 is within a range of 0.25 to 1.5.

4. The electrode (3) according to claim 2, wherein the element ratio r2 is within a range of 0.05 to 0.25.

5. The electrode (3) according to any one of claims 1 to 4, wherein a hydrophilic-lipophilic balance (HLB) value of the nitrogen atom-containing binder is within a range of 8 to 14.

6. The electrode (3) according to any one of claims 1 to 5, wherein the nitrogen atom-containing binder is at least one selected from the group consisting of an acrylic acid binder, an acrylonitrile-based binder, an acrylic acid/acrylonitrile copolymer binder, and a urethane-based binder.

7. The electrode (3) according to any one of claims 1 to 6, wherein a mass ratio of the nitrogen atom-containing binder to a mass of the active material-containing layer (3b) is within a range of 0.5% by mass to 15% by mass.

8. The electrode (3) according to any one of claims 1 to 7, wherein the active material-containing layer (3b) further comprises carboxymethyl cellulose.

9. The electrode (3) according to any one of claims 1 to 8, wherein the niobium-titanium composite oxide is a monoclinic niobium-titanium composite oxide,
   the monoclinic niobium-titanium composite oxide is at least one selected from the group consisting of a composite oxide represented by General Formula $Li_xTi_{1-y}M1_yNb_{2-z}M2_zO_{7+\delta}$, and a composite oxide represented by General Formula $Li_xTi_{1-y}M3_{y+z}Nb_{2-z}O_{7-\delta}$,
   where M1 is at least one selected from the group consisting of Zr, Si, and Sn, M2 is at least one selected from the group consisting of V, Ta, and Bi, and M3 is at least one selected from the group consisting of Mg, Fe, Ni, Co, W, Ta, and Mo, and
   x satisfies $0 \le x \le 5$, y satisfies $0 \le y < 1$, z satisfies $0 \le z < 2$, and $\delta$ satisfies $-0.3 \le \delta \le 0.3$.

10. A secondary battery (100) comprising:

    a positive electrode (5);
    a negative electrode (3); and
    an electrolyte,
    wherein
    the negative electrode (3) is the electrode (3) according to any one of claims 1 to 9.

11. A battery pack (300) comprising the secondary battery (100) according to claim 10.

**12.** The battery pack (300) according to claim 11, further comprising:

an external power distribution terminal (350); and
a protective circuit (346).

**13.** The battery pack (300) according to claim 11 or 12, comprising a plurality of the secondary battery (100), wherein the secondary batteries (100) are electrically connected in series, in parallel, or in series and parallel in combination.

**14.** A vehicle (400) comprising the battery pack (300) according to any one of claims 11 to 13.

**15.** The vehicle (400) according to claim 14, comprising a mechanism configured to convert kinetic energy of the vehicle (400) into regenerative energy.

FIG. 1

FIG. 2

FIG. 3

FIG.4

F I G. 5

F I G. 6

F I G. 7

F I G. 8

F I G. 9

EP 3 883 015 A1

F I G. 10

Europäisches
Patentamt

European
Patent Office

Office européen
des brevets

# EUROPEAN SEARCH REPORT

**Application Number**

EP 20 19 3589

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2010 287496 A (MITSUBISHI CHEM CORP) 24 December 2010 (2010-12-24) * figure 1 * | 1 | INV. H01M4/131 H01M4/36 H01M4/485 |
| X,P | EP 3 627 596 A1 (TOSHIBA KK [JP]; TOSHIBA INFRASTRUCTURE SYSTEMS & SOLUTIONS CORP [JP]) 25 March 2020 (2020-03-25) * claims 8-13; example 12 * | 1,2,5-15 | H01M4/62 H01M4/1391 |
| X | US 2017/271663 A1 (HOSHINA KEIGO [JP] ET AL) 21 September 2017 (2017-09-21) * example 23 * | 1-7, 10-15 | |
| X | US 2018/083283 A1 (YAMASHITA YASUNOBU [JP] ET AL) 22 March 2018 (2018-03-22) * example 5 * | 1-7, 10-15 | |
| X | US 2017/365857 A1 (ISOZAKI YOSHIYUKI [JP] ET AL) 21 December 2017 (2017-12-21) * example 11 * | 1,3,5-7, 9-15 | |

**TECHNICAL FIELDS SEARCHED (IPC)**

H01M

The present search report has been drawn up for all claims

| Place of search | Date of completion of the search | Examiner |
|---|---|---|
| Munich | 18 February 2021 | Raimondi, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 19 3589

This annex lists the patent family members relating to the patent documents cited in the above-mentioned European search report.
The members are as contained in the European Patent Office EDP file on
The European Patent Office is in no way liable for these particulars which are merely given for the purpose of information.

18-02-2021

| Patent document cited in search report | | Publication date | Patent family member(s) | | Publication date |
|---|---|---|---|---|---|
| JP 2010287496 | A | 24-12-2010 | NONE | | |
| EP 3627596 | A1 | 25-03-2020 | CN | 110911660 A | 24-03-2020 |
| | | | EP | 3627596 A1 | 25-03-2020 |
| | | | JP | 2020047437 A | 26-03-2020 |
| | | | US | 2020091505 A1 | 19-03-2020 |
| US 2017271663 | A1 | 21-09-2017 | CN | 107204483 A | 26-09-2017 |
| | | | EP | 3220452 A1 | 20-09-2017 |
| | | | JP | 2017168318 A | 21-09-2017 |
| | | | KR | 20170107891 A | 26-09-2017 |
| | | | US | 2017271663 A1 | 21-09-2017 |
| US 2018083283 | A1 | 22-03-2018 | CN | 107863549 A | 30-03-2018 |
| | | | EP | 3300144 A1 | 28-03-2018 |
| | | | JP | 6666223 B2 | 13-03-2020 |
| | | | JP | 2018049715 A | 29-03-2018 |
| | | | KR | 20180032158 A | 29-03-2018 |
| | | | US | 2018083283 A1 | 22-03-2018 |
| US 2017365857 | A1 | 21-12-2017 | CN | 107210425 A | 26-09-2017 |
| | | | EP | 3352253 A1 | 25-07-2018 |
| | | | JP | 6130052 B1 | 17-05-2017 |
| | | | JP | WO2017046896 A1 | 14-09-2017 |
| | | | US | 2017365857 A1 | 21-12-2017 |
| | | | WO | 2017046896 A1 | 23-03-2017 |

EPO FORM P0459

For more details about this annex : see Official Journal of the European Patent Office, No. 12/82